# EUROPÄISCHE PATENTSCHRIFT

(11) **EP 1 664 569 B1**
(45) Veröffentlichungstag und Bekanntmachung des Hinweises auf die Patenterteilung: **07.05.2008**
(21) Anmeldenummer: 04786768.4
(22) Anmeldetag: 09.09.2004
(51) Int. Cl.: F16D 41/20, B60N 2/44, E05F 11/50

(54) **VERSTELLVORRICHTUNG ZUR ERZEUGUNG EINER BEIDSEITIGEN DREHBEWEGUNG**
ADJUSTMENT DEVICE FOR PRODUCING A TWO-SIDED ROTATIONAL MOVEMENT
DISPOSITIF DE REGLAGE PERMETTANT LA PRODUCTION D'UN MOUVEMENT DE ROTATION BILATERAL

(30) Priorität: 10.09.2003 DE 10342491; 16.12.2003 DE 10361148
(43) Veröffentlichungstag der Anmeldung: 07.06.2006
(73) Patentinhaber: Brose Fahrzeugteile GmbH & Co. KG, Coburg, 96450 Coburg (DE)
(72) Erfinder: KLOPP, Marcus, 96450 Coburg (DE); ANGERMÜLLER, Stephanie, 96279 Weidhausen (DE); WEIß , Matthias, 96472 Rödental (DE); SCHECK, Georg, 96479 Weitramsdorf (DE); KRÜGER, Frieder, 96271 Grub (DE)
(74) Vertreter: Ninnemann, Detlef
(86) Internationale Anmeldenummer: PCT/DE2004/002048
(87) Internationale Veröffentlichungsnummer: WO 2005/024264

(56) Entgegenhaltungen:
- DE-A1- 10 146 771
- DE-A1- 19 907 483
- GB-A- 2 054 725

## Beschreibung

Die Erfindung bezieht sich auf eine Verstellvorrichtung zur Erzeugung einer beidseitigen Drehbewegung gemäß dem Oberbegriff des Anspruchs 1.

Aus der DE 199 07 483 ist eine beidseitig wirkende Verstellvorrichtung zur Erzeugung einer Drehbewegung bekannt, die ein Gehäuse aufweist, in dem ein Antriebselement und ein durch Betätigen des Antriebselementes winkelverstellbares Abtriebselement sowie eine Schlingfeder angeordnet sind, die sich zumindest teilweise an der Innenwand des Gehäuses abstützt und dadurch ein abtriebsseitig eingeleitetes Drehmoment blockiert und sich bei einem antriebsseitig eingeleiteten Drehmoment zusammenzieht und dadurch die Übertragung eines Drehmoments vom Antriebselement auf das Abtriebselement freigibt. Die Enden der Schlingfeder sind mit einem zwischen dem Antriebselement und dem Abtriebselement angeordneten Übertragungselement verbunden, das einen kreissegmentförmig um die Achse des Abtriebselementes angeordneten Grundkörper aufweist. Zur Verminderung des Spiels bei der Übertragung eines Drehmomentes vom Antriebselement zum Abtriebselement verjüngt sich das Gehäuse zur Achse des Abtriebselementes und das Übertragungselement bzw. die Schlingfeder sind axial in Richtung des sich verringernden Gehäusedurchmessers vorgespannt.

Das Antriebselement kann bei der bekannten Verstellvorrichtung zusätzlich mit einem radial oder in Umfangsrichtung geführten Ausgleichselement versehen werden, das spielfrei an den Anschlagsflächen des Übertragungselementes anliegt und aus zwei in Umfangsrichtung gegeneinander verschiebbaren Scherenhebeln sowie einem zwischen den Scherenhebeln angeordneten und in einer Führung des Antriebselementes gelagerten, radial federbelasteten Keilschieber aufweisen, der mit einer mittigen, in der Führung des Antriebselementes geführten und federbelasteten Keilführung versehen ist, so dass durch seine radiale Verschiebung in der Führung des Antriebselementes eine in Umfangsrichtung wirkende Kraft auf die Scherenhebel ausgeübt und dadurch eine ausreichende Spielfreiheit gewährleistet wird.

Eine derartige Verstellvorrichtung eignet sich sowohl für die Übertragung eines antriebsseitigen Drehmoments von einem Antriebselement zu einem angetriebenen Element als auch als Bremssperre zum Blockieren eines von der Abtriebsseite der Verstellvorrichtung eingeleiteten Drehmoments. Die Verwendung einer Schlingfeder als Kraftübertragungselement zur Übertragung der Verstellbewegung des Antriebselements zum angetriebenen Element bzw. als Bremselement zum Blockieren eines abtriebsseitigen Drehmoments durch Aufweiten der Schlingfeder und Sperren durch Anlage der zylindrischen Anlagefläche der Schlingfeder an einem ortsfesten Verstellgehäuse erfordert eine exakte Abstimmung der Kraftübertragungselemente, um einerseits eine möglichst spielfreie Kraftübertragung vom Antriebselement zum angetriebenen Element und ein sicheres Blockieren abtriebsseitig eingeleiteter Drehmomente zu gewährleisten, sobald diese grö-ßer oder gleich einem antriebsseitig eingeleiteten Drehmoment sind.

Ein weiteres Problem besteht darin, das Antriebselement nach erfolgter Verstellbewegung bei entspanntem Verstellsystem zuverlässig in die neutrale Ausgangstellung zurück zu bewegen, ohne dabei eine unbeabsichtigte Verstellung der mit der Verstellvorrichtung verbundenen Verstelleinrichtung eines Kraftfahrzeugs auszulösen.

Da derartige Verstellvorrichtungen in größeren Stückzahlen eingesetzt werden, werden weiterhin geringe Herstellungskosten sowie für den Einbau in ein Kraftfahrzeug ein geringer Fertigungs- und Einbauaufwand sowie ein geringes Gewicht angestrebt.

Aufgabe der vorliegenden Erfindung ist es, eine Verstellvorrichtung der eingangs genannten Art anzugeben, die sich bei gleichem Funktionsprinzip sowohl für einen Antrieb als auch für eine Bremssperre eignet, eine einfache Lagerung des Federelements ermöglicht und eine gute Kraftübertragung zwischen dem Antriebselement und dem angetriebenen Element bzw. ein sicheres Blockieren abtriebsseitig eingeleiteter Drehmomente und eine sichere Rückstellung der Funktionselemente der Verstellvorrichtung in die neutrale Ausgangsstellung unabhängig von der Federkraft des Federelements gewährleistet.

Diese Aufgabenstellung wird für einen Antrieb zur Kraftübertragung von einem Antriebselement zu einem angetriebenen Element dadurch gelöst, dass die Kupplung oder Bremssperre mindestens ein Schlingfederband enthält, das einen Umfang von weniger als 360° und Anlageflächen zur Kraftübertragung vom Antriebselement zum angetriebenen Element oder vom angetriebenen Element zum Abtriebselement oder vom Abtriebselement zum Verstellgehäuse aufweist.

Die erfindungsgemäße Lösung ermöglicht eine einfache und insbesondere schwimmende Lagerung des als Federelement eingesetzten Schlingfederbandes sowie infolge des auf die Federenden einwirkenden Verstärkungshebels eine gute Kraftübertragung zwischen dem Antriebselement und dem angetriebenen Element, so dass ein sicheres Blockieren abtriebsseitig eingeleiteter Drehmomente und eine sichere Rückstellung der Funktionselemente der Verstellvorrichtung in die neutrale Ausgangsstellung unabhängig von der Federkraft des Federelements gewährleistet sind.

Vorzugsweise weist die Kupplung einen mit dem Antriebselement wirkverbundenen Verstärkungshebel und ein mit Vorspannung zumindest teilweise an der hohlzylindrischen Anlagefläche des angetriebenen Elements anliegendes Schlingfederband auf, dessen Federenden mit dem Verstärkungshebel wirkverbunden sind.

Der Verstärkungshebel ist mit Spiel um die Verstellachse drehbar, weist mindestens einen zwischen den Federenden des Schlingfederbandes positionierten Nocken auf, der zur Übertragung eines durch Verschwenken des Antriebselements aus der neutralen Ausgangsstellung vom Antriebselement ausgehenden Antriebsmoments das Schlingfederband derart aufweitet, dass es reibschlüssig an der hohlzylindrischen Anlagefläche des Antriebstopfes anliegt, und ist mit Übertragungshebeln wirkverbunden, die beim Zurückstellen des Antriebselements von der ausgelenkten Stellung in die neutrale Ausgangsstellung auf vom Schlingfederband abgewinkelte Stützarme derart einwirken, dass das Schlingfederband zusammengezogen und seine reibschlüssige Anlage an der hohlzylindrischen Anlagefläche des Antriebstopfes aufgehoben wird.

Zusätzlich zu dem schwimmend gelagerten Schlingfederband weist die Kupplung in einer ersten und zweiten Ausführungsform zwei an einer Antriebsachse des Antriebselements und des angetriebenen Elements angelenkte Übertragungshebel mit jeweils einem radialen Hebelarm auf, der jeweils einem vom Schlingfederband abgewinkelten Stützarm gegenübersteht, der an seinem nach innen gerichteten Ende eines der Federenden des Schlingfederbandes ausbildet, und mit einem zweiten Hebelarm, der an einem gehäusefesten Anschlag und an einem Verbindungsbolzen des Verstärkungshebels mit dem Antriebselement anliegt, wobei zwischen den Übertragungshebeln Rückstellfedern angeordnet sind, die zum Rückstellen des Schlingfederbandes und des Antriebselements in Abhängigkeit von der Richtung der Rückstellung jeweils einen radialen Hebelarm der Übertragungshebel gegen einen der abgewinkelten Stützarme des Schlingfederbandes drücken und wobei zum Rückstellen des Antriebselements in Abhängigkeit von der Richtung der Rückstellbewegung jeweils ein zweiter Hebelarm gegen den mit dem Antriebselement verbundenen Verbindungsbolzen drückt.

Damit ist eine sichere Rückstellung sowohl des Antriebselements als auch des Schlingfederbandes in eine neutrale Ausgangsstellung mittels einer einzelnen Feder unabhängig von der Federkraft des Schlingfederbandes gewährleistet.

Vorzugsweise sind zwei an der Verstellachse angelenkte Übertragungshebel vorgesehen, die radial von der Verstellachse ausgehende Hebelarme aufweisen, die einem abgewinkelten Stützarm des Schlingfederbandes zugeordnet sind, an einem gehäusefesten Anschlag anliegen und mit dem Verstärkungshebel wirkverbunden sind. Weiterhin ist zwischen den Übertragungshebeln mindestens eine Rückstellfeder angeordnet, die zum Rückstellen des Schlingfederbandes und des mit dem Verstärkungshebel verbundenen Antriebselements in Abhängigkeit von der Richtung der Rückstellung jeweils einen radialen Hebelarm der Übertragungshebel gegen einen der abgewinkelten Stützarme des Schlingfederbandes und gegen Anschläge des Verstärkungshebels drückt.

In der ersten Ausführungsform ist eine Rückstellfeder auf zwei von den radialen Hebelarmen der Übertragungshebel ausgehenden und in Umfangsrichtung gebogenen Hebelfortsätzen angeordnet, die sich konzentrisch zur Verstellachse jeweils vom radialen Hebelarm des einen Übertragungshebels zum radialen Hebelarm des anderen Übertragungshebels erstrecken und zueinander ausgerichtet sowie aneinander vorbei bewegbar sind, und stützt sich an den radialen Hebelarmen der Übertragungshebel ab.

In der zweiten Ausführungsform weisen die Übertragungshebel einen zweiten Hebelarm auf, der an einem gehäusefesten Anschlag und an einem Verbindungsbolzen des Verstärkungshebels mit dem Antriebselement anliegt. Zum Rückstellen des Antriebselements in Abhängigkeit von der Richtung der Rückstellbewegung drückt jeweils einer der zweiten Hebelarme der Übertragungshebel gegen den mit dem Antriebselement gelenkig verbundenen Verbindungsbolzen.

In dieser zweiten Ausführungsform sind zwei Rückstellfedern auf den gebogenen Hebelfortsätzen der Übertragungshebel geführt und stützen sich an den radialen und den zweiten Hebelarmen der Übertragungshebel ab. Durch Kontaktnasen an den radialen Hebelarmen der Übertragungshebel, die an abgewinkelten Stützarmen des Schlingfederbandes anliegen und zwischen denen und den abgewinkelten Stützarmen in der neutralen Ausgangsstellung des Antriebselements ein geringes Spiel vorgesehen ist und die zum Rückstellen des Schlingfederbandes und des Antriebselements gegen die abgewinkelten Stützarme des Schlingfederbandes drücken, ist ein optimaler peripherer Kraftangriff zum Rückstellen des Schlingfederbandes und des Antriebselements gewährleistet.

Weiterhin könne in dieser zweiten Ausführungsform die einen Federenden und die Enden der abgewinkelten Stützarme des Schlingfederbandes über Stege miteinander verbunden werden, wobei die abgewinkelten Stützarme des Schlingfederbandes eine Crackverbindung aufweisen können. Alternativ sind die Federenden des Schlingfederbandes zur Senkung der Herstellungskosten nicht gecrackt, sondern verdickt ausgebildet.

Zur Sicherung der radialen Beweglichkeit bei der Kraftübertragung von einem Betätigungshebel zum angetriebenen Element bzw. einem Antriebstopf ist der Verstärkungshebel über ein Langloch mit der Verstellachse verbunden.

In der Ausführungsform mit einer Rückstellfeder sind an den Enden der radialen Hebelarme der Übertragungshebel Kontaktnasen angeordnet, von denen in axialer Richtung Anschlagnocken abstehen, die an den gehäusefesten Anschlägen anliegen. In dieser Ausführungsform ist der Verstärkungshebel zweiteilig ausgebildet und weist einen am ersten Verstärkungshebelteil ausgebildeten, zwischen den Federenden des Schlingfederbandes angeordneten Nocken auf, ist mit einem Langloch um die Verstellachse angeordnet und enthält ein diagonal gegenüberliegendes erstes Verbindungselement, das mit einem zweiten Verbindungselement eines zweiten Verstärkungshebelteils verbunden ist, das eine um die Verstellachse angeordnete Bohrung und zwei an den Anschlagnocken der Übertragungshebel anliegende Anschläge aufweist, wobei die beiden Verstärkungshebelteile in axialer Richtung übereinander angeordnet sind. Von der dem ersten Verstärkungshebelteil abgewandten Oberfläche des zweiten Verstärkungshebelteils können Stege abstehen, die durch in Umfangsrichtung verlaufende Schlitze eines mit dem Verstellgehäuse verbundenen Gehäusedeckels ragen und in Aufnahmeschlitze einer mit einem Betätigungshebel oder einem Betätigungsrad verbindbaren Hebel-Anschraubplatte gesteckt sind.

In einer dritten Ausführungsform weist der Verstärkungshebel zwei symmetrisch zur Antriebsachse angeordnete, diagonal zu einer von der Verbindung des Verstärkungshebels mit den Federenden des Schlingfederbandes zur Wirkverbindung des Verstärkungshebels mit dem Antriebselement führenden Symmetrieachse verlaufende Anlageflächen auf, die korrespondierenden Endflächen zweier abgewinkelter Stützarme des Schlingfederbandes gegenüberstehen, wobei die Federenden einer konzentrisch zur Antriebsachse angeordneten Zentrier- und Rückstellfeder an einem ortsfesten Anschlag, an der Wirkverbindung zwischen dem Verstärkungshebel und dem Antriebselement und einem Vorsprung des Schlingfederbandes anliegen.

Auch in dieser Ausführungsform gewährleistet die erfindungsgemäße Lösung eine einfache und insbesondere schwimmende Lagerung des als Federelement eingesetzten mindestens einen Schlingfederbandes sowie eine gute Kraftübertragung vom Betätigungshebel zum angetriebenen Element.

In einer Ausführungsform als Bremssperre zum Blockieren abtriebsseitiger Drehmomente und zur Übertragung antriebsseitiger Drehmomente, die beispielsweise von einem der vorstehenden Verstellantriebe eingeleitet werden, weist die Verstellvorrichtung mindestens ein sich zum Blockieren eines abtriebsseitigen Drehmoments am Verstellgehäuse abstützendes Schlingfederband, zwischen den Federenden des Schlingfederbandes und dem Antriebselement angeordnete Verstärkungshebel, die bei einem abtriebsseitigen Drehmoment, das größer als ein antriebsseitiges Drehmoment ist, das Schlingfederband zur reibschlüssigen Anlage am Verstellgehäuse aufweiten und zumindest an abgewinkelten Stützarmen des Schlingfederbandes anliegende erste Steuerelemente des Antriebstopfes aufweist, die bei einem antriebsseitigen Drehmoment, das größer als ein abtriebsseitiges Drehmoment ist, die reibschlüssige Anlage des Schlingfederbandes am Verstellgehäuse aufheben, wobei zweite Steuerelemente des Antriebstopfes zusätzlich mit dem Abtriebselement wirkverbunden sind und mittlere Anlageflächen der Verstärkungshebel an den abgewinkelten Stützarmen des Schlingfederbandes anliegen.

In dieser Ausführungsform als Bremssperre bewirken die Steuerelemente das Blockieren abtriebsseitiger Drehmomente bzw. das Freischalten antriebsseitiger Drehmomente vom Antriebselement bzw. angetriebenen Element zum Abtriebselement.

Das Abtriebselement kann einen zwischen den Verstärkungshebeln angeordneten Abtriebshebel enthalten, der mit einem konzentrisch zur Verstellachse angeordneten Abtriebsritzel verbunden ist, so dass eine optimale Kraftübertragung vom Antriebselement bzw. angetriebenen Element zum Abtriebselement gewährleistet ist.

Die Verstärkungshebel weisen zwischen den Federenden des Schlingfederbandes angeordnete äußere Anlageflächen und den äußeren Anlageflächen gegenüberliegende, am Abtriebselement anliegende Anlagenasen auf, während die in das Verstellgehäuse ragenden Steuerelemente des angetriebenen Elements bzw. Antriebstopfes an Anschlägen der Übertragungshebel und den abgewinkelten Stützarmen des Schlingfederbandes anliegen.

Die Kraftübertragung von den Übertragungshebeln zu den Schlingfederbändern wird vorzugsweise dadurch gesteuert, dass die abgewinkelten Stützarme des Schlingfederbandes zum Blockieren des Schlingfederbandes an einer mittleren Anlagefläche der Verstärkungshebel anliegen, während sich die Federenden der Schlingfederbänder an der äußeren Anlagefläche der Verstärkungshebel abstützen und eine Drehbewegung des Schlingfederbandes unterstützen.

In dieser Ausführungsform weist die Bremssperre zwei sich zum Blockieren eines abtriebsseitigen Drehmoments am Verstellgehäuse abstützende, axial zueinander versetzte Schlingfederbänder auf und zum gegenseitigen Verspannen der Schlingfederbänder zu deren Anlage an das hohlzylindrische Verstellgehäuse enthalten die abgewinkelten Stützarme der Schlingfederbänder Aufnahmen für eine Blattfeder, die die abgewinkelten Stützarme miteinander verbindet, die Schlingfederbänder in Umfangsrichtung gegeneinander verspannt, wobei die äußeren Federenden gegen die äußeren Anlageflächen der Verstärkungshebel drücken und sich die Verstärkungshebel in einem mittleren Bereich mit ihren Anlageflächen an den abgewinkelten Federenden) abstützen und dadurch mit ihren an den anderen Enden vorhandenen Anlageflächen gegen den Abtriebshebel drücken, so dass der Abtrieb spielfrei gesetzt ist.

In einer weiteren Ausführungsform weist die Bremssperre zwei gegeneinander verschiebbare Verstärkungshebel auf, die über wenigstens ein Federelement vorgespannt sind, wobei die äußeren Federenden des Schlingfederbandes gegen die äußeren Anlageflächen des einen Endes der Verstärkungshebel drücken, sich die Verstärkungshebel in einem mittleren Bereich an den Anschlagflächen der mittleren, im Wesentlichen radial gerichteten Stützarme abstützen und die an den anderen Enden der Verstärkungshebel angeordneten Anlageflächen am Abtriebselement anliegen.

Weiterhin können die abgewinkelten Stützarme der Schlingfederbänder Aufnahmen für eine gebogene, vorzugsweise mittig abgestützte Blattfeder aufweisen, die die abgewinkelten Stützarme der Schlingfederbänder miteinander verbindet.

Alternativ kann das Federelement aus einer zwischen den an den äußeren Federenden der Schlingfederbänder anliegenden äußeren Anlagefläche der Verstärkungshebel angeordneten oder an einander gegenüberstehenden Anlageschultern der Schlingfederbänder anliegenden Druckfeder bestehen.

Dabei weist wenigstens ein Paar der Anlageflächen der Verstärkungshebel beiderseits einer von der Verstellachse und dem Abtriebselement gebildeten Symmetrieachse einen bezüglich dieser Symmetrieachse winkligen Verlauf aufweisen, so dass der Abtrieb spielfrei gesetzt ist und das Schlingfederband auf das Verstellgehäuse vorgespannt ist.

Zur unverzüglichen Übertragung der Kraft von den Antriebsklauen zum Schlingfederband ist mindestens eine Mitnahmefeder zwischen beidseitigen Anschlägen des Schlingfederbandes und den Antriebsklauen angeordnet.

Um ein Spiel vom angetriebenen Element zum Abtriebselement herauszunehmen, sind die Verstärkungshebel über ein zwischen der Antriebsachse und inneren Anschlägen der Verstärkungshebel angeordnetes Federelement gegen das Abtriebselement vorgespannt.

Das Abtriebselement kann Ausnehmungen zur Aufnahme von Formstücken der Anlageflächen der Bremsverstärkungshebel, die den an den äußeren Federenden der Schlingfederbänder anliegenden Anlageflächen gegenüber liegen, und einen Abtriebsnocken aufweisen, an dem die zweiten Steuerelemente des angetriebnen Elementes bzw. des Antriebstopfes anliegen.

Anhand von in der Zeichnung dargestellten Ausführungsbeispielen für als Verstellantrieb und als Bremssperre ausgebildete Verstellvorrichtungen sollen die Erfindung und weitere Einzelheiten der Erfindung näher erläutert werden. Es zeigen:
- Fig. 1: einen Schnitt durch einen Verstellantrieb mit einer Kupplung zwischen einem Betätigungshebel und einem mittels des Betätigungshebels angetriebenen Antriebstopf in einer ersten Ausführungsform eines Schlingfederbandes;
- Fig. 2: einen Schnitt durch einen Verstellantrieb mit einer Kupplung zwischen einem Betätigungshebel und einer mittels des Betätigungshebels angetriebenen Antriebstopf in einer zweiten Ausführungsform eines Schlingfederbandes;
- Fig. 3a - 3e: Schnitte durch einen Verstellantrieb mit einer einzelnen Rückstellfeder zwischen Übertragungshebeln in einzelnen Phasen des Zusammenbaus des Verstellantriebs;
- Fig. 4a - 4h: perspektivische Darstellungen einzelner Phasen des Zusammenbaus des Verstellantriebs gemäß Fig. 3;
- Fig. 5: einen Schnitt durch einen Verstellantrieb mit einer Kupplung zwischen einem Betätigungshebel und einem mittels des Betätigungshebels angetriebenen Antriebstopf in einer dritten Ausführungsform mit klemmfreier Rückstellung des Antriebselements;
- Fig. 6: einen Schnitt durch eine als Bremssperre ausgebildete Verstellvorrichtung mit zwei axial zueinander versetzt angeordneten Schlingfederbändern, zwei Übertragungshebeln und einer die Schlingfederbänder vorspannenden Blattfeder;
- Fig. 7: einen Schnitt durch eine als Bremssperre ausgebildete Verstellvorrichtung mit einer zwischen den Anlageflächen der Übertragungshebel angeordneten Druckfeder;
- Fig. 8: einen Schnitt durch eine als Bremssperre ausgebildete Verstellvorrichtung mit zwei axial zueinander versetzt angeordneten Schlingfederbändern, zwei Übertragungshebel, einer die Schlingfederbänder vorspannenden Omega-Feder und unmittelbar am Abtriebselement angreifenden Steuerelementen eines Antriebstopfes;
- Fig. 9a - 9f: perspektivische Darstellungen einzelner Phasen des Zusammenbaus der als Bremssperre ausgebildeten Verstellvorrichtung gemäß Fig. 8;
- Fig. 10: einen Schnitt durch eine als Bremssperre ausgebildete Verstellvorrichtung entsprechend der Bremssperre gemäß Fig. 8 mit einer Druckfeder zwischen Anlageschultern der Schlingfederbänder und
- Fig. 11: einen Schnitt durch eine Bremssperre mit einem einzelnen Schlingfederband und zwei spielfrei am Abtriebselement anliegenden Verstärkungshebeln.

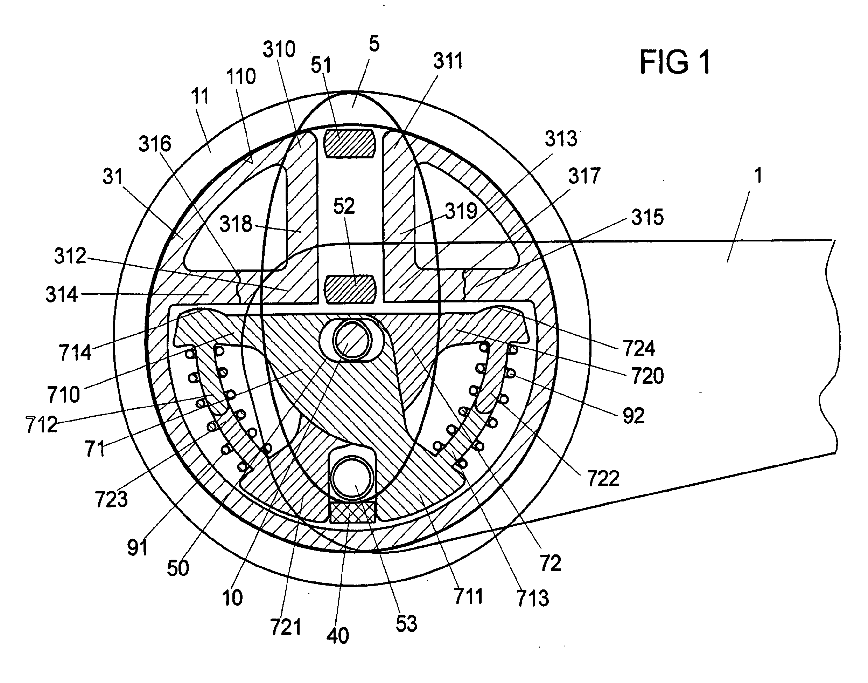

Der in Fig. 1 dargestellte Schnitt durch eine erste Ausführungsform einer Verstellvorrichtung zeigt ein um eine Verstellachse 10 drehbares angetriebenes Element 11, das wegen seiner konstruktiven Ausgestaltung nachfolgend als "Antriebstopf" mit einer hohlzylindrischen Anlagefläche 110 bezeichnet wird. Der Antriebstopf 11 wird unter Zwischenschaltung nachfolgend an Hand der Fig. 1 bis 5 beschriebener Verstellantriebe mittels eines um die Verstellachse 10 schwenkbaren Betätigungshebel 1 als Antriebselement je nach der Schwenkrichtung des Betätigungshebels 1 in der einen oder anderen Richtung um die Verstellachse 10 gedreht.

In den hohlzylindrischen Innenraum des Antriebstopfes 11 ist ein Schlingfederband 31 schwimmend gelagert mit Vorspannung eingesetzt, so dass das Schlingfederband 31 bei einer Herausnahme aus dem hohlzylindrischen Innenraum des Antriebstopfes 11 aufspringen würde. Das Schlingfederband 31 weist mehrere Federenden 310 - 313 auf, von denen äußere Federenden 310, 311 am Ende des Schlingfederbandes 31 und zweite Federenden 312, 313 an den Enden abgewinkelter Stützarme 314, 315 des Schlingfederbandes 31 ausgebildet sind. Beide Federenden 310 bis 313 sind jeweils durch einen Steg 318, 319 miteinander verbunden.

Zwischen den Federenden 310 bis 313 des Schlingfederbandes 31 liegen Nocken 51, 52 eines Verstärkungshebels 5, der über ein Langloch 50 auf der Verstellachse 10 gelagert ist und auf der den Nocken 51, 52 gegenüber liegenden Seite in Bezug auf die Verstellachse 10 einen den Verstärkungshebel 5 mit dem Betätigungshebel 1 verbindenden Verbindungsbolzen 53 aufweist.

Die abgewinkelten Stützarme 314, 315 des Schlingfederbandes 31 weisen eine Crackverbindung 316, 317 auf, die beispielsweise durch Aufbrechen des Schlingfederbandes 31 und Einsetzen eines Zapfens erzeugt wird, so dass sich die äußeren Federenden 310, 311 des Schlingfederbandes 31 bei Druck an den abgewinkelten Stützarmen 314, 315 mit Passgenauigkeit abstützen. Durch diese Ausgestaltung der Federenden 310, 311 des Schlingfederbandes 31 werden die von den Nocken 51, 52 des Verstärkungshebels 5 auf das Schlingfederband 31 ausgeübten Kräfte problemlos aufgenommen und gewährleisten einen flexiblen Kraftaufbau des Schlingfederbandes 31.

An der Verstellachse 10 sind zwei Übertragungshebel 71, 72 gelagert, die jeweils mit an den Enden von zwei radialen Hebelarmen 710, 720 ausgebildeten Kontaktnasen 714, 724 mit Spiel den abgewinkelten Stützarmen 314, 315 des Schlingfederbandes 31 gegenüberstehen und nur beim Rückstellen an den abgewinkelten Stützarmen 314, 315 des Schlingfederbandes 31 anliegen. Mit in Bezug auf die Anlenkung an der Verstellachse 10 gegenüberliegenden zweiten Hebelarmen 711, 721 stützen sich die Übertragungshebel 71, 72 am Verbindungsbolzen 53 des Verstärkungshebels 5 und an einem gehäusefesten Anschlag 40 ab.

Auf Hebelfortsätzen 712, 713; 722, 723 der Übertragungshebel 71, 72, die sich jeweils von dem radialen Hebelarm 710, 720 des einen Übertragungshebels 71, 72 zum zweiten Hebelarm 711, 721 des anderen Übertragungshebels 71, 72 erstrecken, zueinander ausgerichtet sind und aneinander vorbeibewegt werden können, sind Rückstellfedern 91, 92 gelagert, die sich an den radialen bzw. zweiten Hebelarmen 710, 711, 720, 721 abstützen und sowohl der Zentrierung bzw. Rückführung des Betätigungshebels 1 als auch der Rückstellung des Schlingfederbandes 31 in die neutrale Ausgangsstellung dienen.

Nachstehend soll die Funktion des in Fig. 1 dargestellten Verstellantriebes erläutert werden.

Wird der Betätigungshebel 1 in der einen oder anderen Richtung um die Verstellachse 10 verschwenkt, so wird der Verbindungsbolzen 53 in die Schwenkrichtung und der bei dieser Schwenkrichtung mit seinem zweiten Hebelarm 711 bzw. 721 am Verbindungsbolzen 53 anliegende Übertragungshebel 71 bzw. 72 ebenfalls mitgedreht, so dass beide Rückstellfedern 91, 92 zusammengedrückt werden. Durch die Anlenkung des Betätigungshebels 1 am Verbindungsbolzen 53 wird auch der Verstärkungshebel 5 mitgedreht bis die Nocken 51, 52 nach einem kurzen Leerweg an den Federenden 310 bis 313 des Schlingfederbandes 31 zur Anlage kommen und das Schlingfederband 31 in die der Schwenkrichtung des Betätigungshebels 1 entsprechende Drehrichtung um die Verstellachse 10 mitnehmen. Beispielsweise kommt bei einem Schwenken des Betätigungshebels 1 um die Verstellachse im Uhrzeigersinn der Nocken 51 zur Anlage an das Federende 311 und der Nocken 52 zur Anlage an das Federende 312, während beim Schwenken des Betätigungshebels 1 um die Verstellachse entgegen dem Uhrzeigersinn der Nocken 51 zur Anlage an das Federende 310 und der Nocken 52 zur Anlage an das Federende 313 kommt, so dass jeweils eine gekreuzte Anlage der Nocken 51, 52 an den Federenden 310 bis 313 gegeben ist.

Dabei werden die Rückstellfedern 91, 92 bis zum Ende des Schwenkhubes des Betätigungshebels 1 weiter gespannt, während die Kontaktnasen 714, 724 an den ersten Hebelarmen 710, 720 der Übertragungshebel 71, 72 von den abgewinkelten Stützarmen 314, 315 des Schlingfederbandes 31 Abstand halten, wenn sich der Verstärkungshebel 5 außerhalb der neutralen Ausgangsstellung befindet.

Wird am Ende des Verstellhubes keine Kraft mehr auf den Betätigungshebel 1 ausgeübt, so drücken die Rückstellfedern 91, 92 zum Rückstellen des Betätigungshebels 1 die Übertragungshebel 71, 72 in Richtung der neutralen Ausgangsstellung. Über die Anlage der zweiten Hebelarme 711, 721 der Übertragungshebel 71, 72 am Verbindungsbolzen 53 wird der ebenfalls am Verbindungsbolzen 73 angelenkte Betätigungshebel 1 mitgenommen bis sich der Verstärkungshebel 5 in der neutralen Ausgangsstellung befindet und die Kontaktnasen 714, 724 der radialen Hebelarme 710, 720 der Übertragungshebel 71, 72 an den abgewinkelten Stützarmen 314, 315 des Schlingfederbandes 31 anliegen. In dieser verspannungsfreien neutralen Ausgangsstellung bewegen sich die Funktionselemente der Verstellvorrichtung leichtgängig, d.h. im Wesentlichen reibungsfrei in die neutrale Ausgangsstellung zurück.

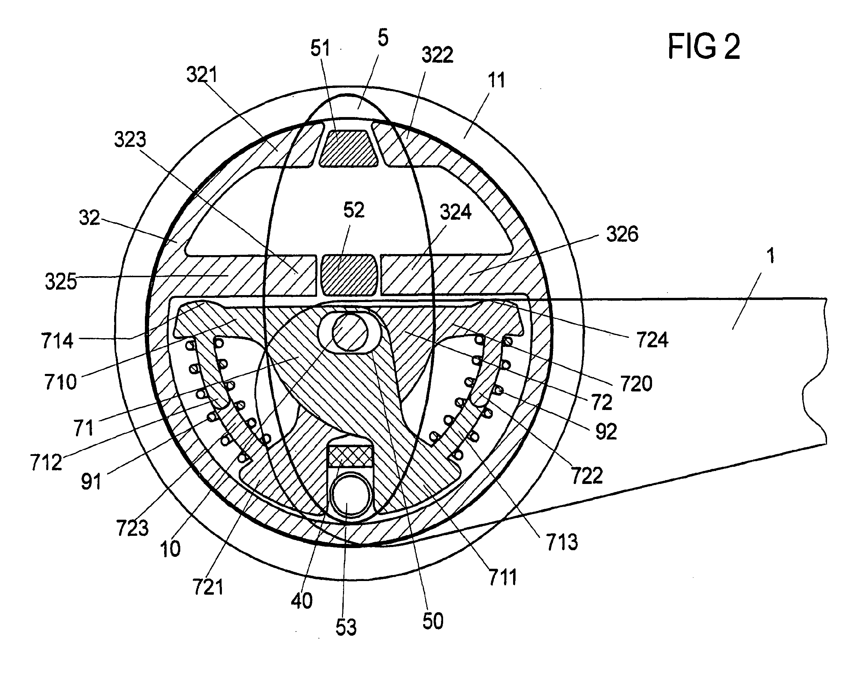

Die in Fig. 2 im Schnitt dargestellte zweite Ausführungsform eines Verstellantriebs unterscheidet sich von der in Fig. 1 im Querschnitt dargestellten ersten Ausführungsform dahingehend, dass zur Vereinfachung der Herstellung des Verstellantriebs keine Crackverbindung am Federende eines Schlingfederbandes 32 erforderlich ist, sondern äußere Federenden 321, 322 des Schlingfederbandes 32 verdickt ausgebildet sind und dem ersten Nocken 51 des Verstärkungshebels 5 gegenüberstehen, während abgewinkelte Stützarme 325, 326 des Schlingfederbandes 32 zweite - ggf. ebenfalls verdickte - Federenden 323, 324 ausbilden, die dem zweiten Nocken 52 des Verstärkungshebels 5 gegenüber stehen.

Der weitere Aufbau und die Funktion der in Fig. 2 im Querschnitt dargestellten zweiten Variante eines Verstellantriebs entspricht bei übereinstimmenden Bezugsziffern dem Aufbau der Funktion der in Fig. 1 im Querschnitt dargestellten ersten Variante, so dass insoweit auf die vorstehende Beschreibung der Fig. 1 Bezug genommen wird.

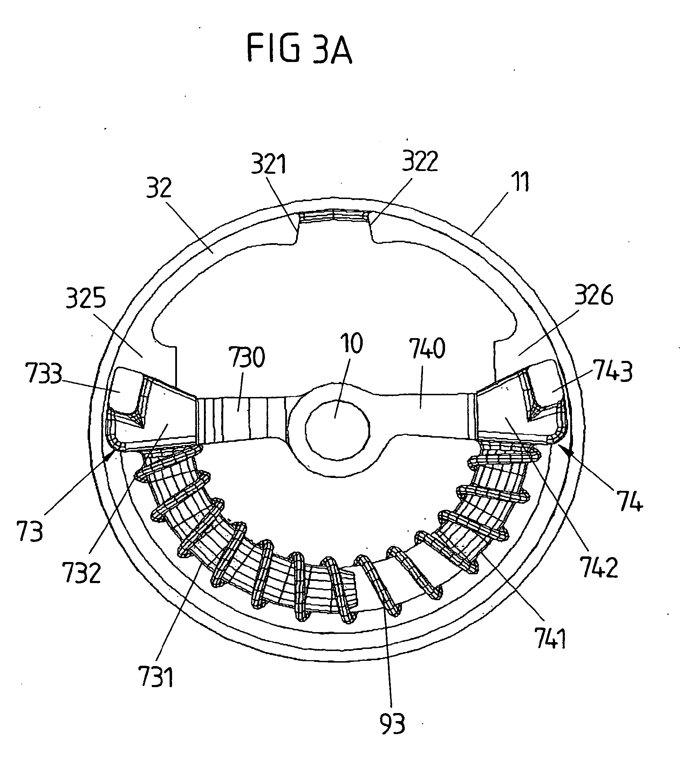

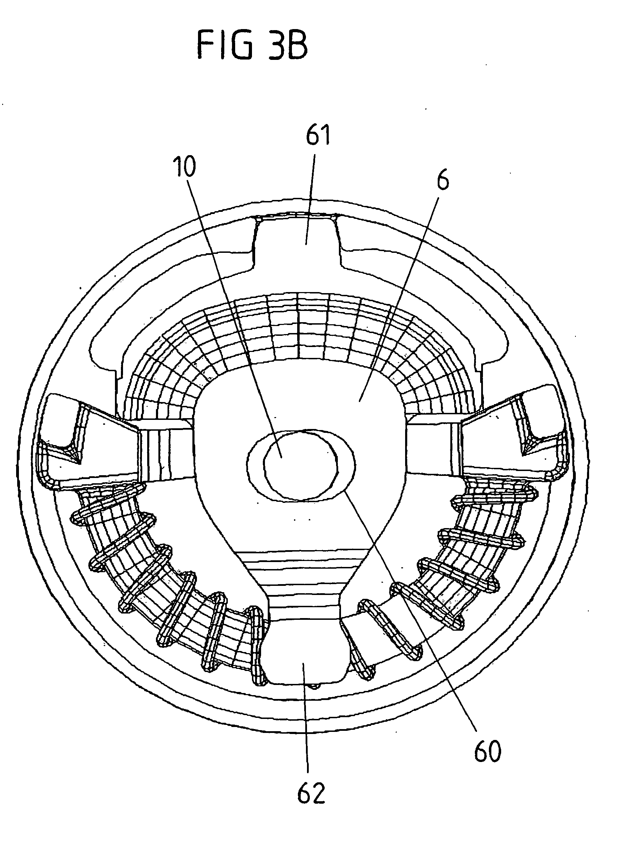

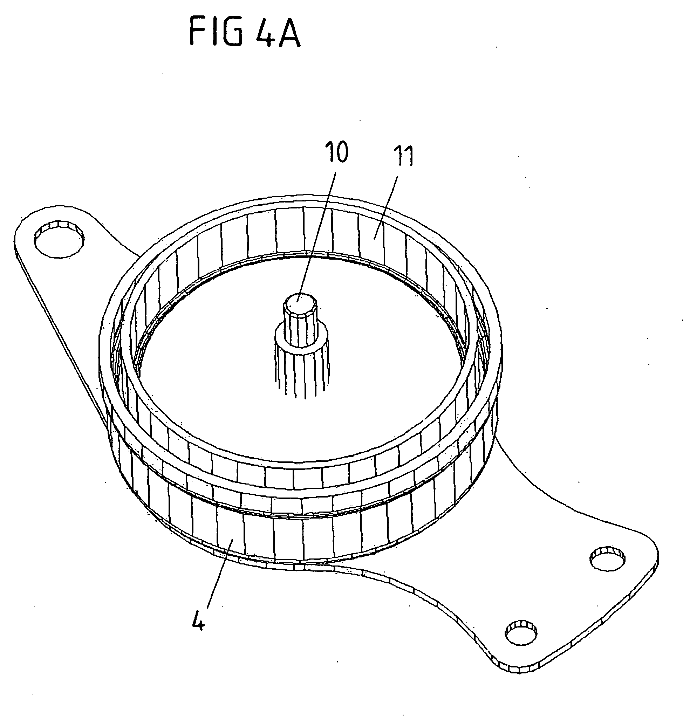

Bei dem in den Fig. 3A bis 3E in einer Draufsicht und in den Fig. 4A bis 4H perspektivisch in aufeinanderfolgenden Montagephasen dargestellten Verstellantrieb ist ein Verstärkungshebel 6, 6' zweiteilig ausgebildet und weist in einer ersten Ebene ein erstes Verstärkungshebelteil 6 auf, das gemäß Fig. 3B einen zwischen den äußeren, verdickten Federenden 321, 322 des Schlingfederbandes 32 angeordneten Nocken 61, ein die Verstellachse 10 umgebendes Langloch 60 und ein in Bezug auf das Langloch 60 dem Nocken 61 gegenüberliegendes erstes Verbindungsteil 62 aufweist.

Zwei axial versetzt zueinander angeordnete Übertragungshebel 73, 74 weisen gemäß Fig. 3A zwei in axialer Richtung übereinander angeordnete und über eine Bohrung an der Verstellachse 10 angelenkte radiale Hebelarme 730, 740 auf, an deren der Verstellachse 10 entgegengesetzte Enden Kontaktnasen 732, 742 vorgesehen sind, die mit Spiel abgewinkelten Stützarmen 325, 326 des Schlingfederbandes 32 gegenüberstehen und nur beim Rückstellen des Verstellantriebs an den abgewinkelten Stützarmen 325, 326 des Schlingfederbandes 32 anliegen. Weiterhin weisen die Kontaktnasen 732, 742 der Übertragungshebel 73, 74 zwei in axialer Richtung von den Kontaktnasen 732, 742 abstehende Nocken 733, 743 auf, die in einer zweiten Ebene an gehäusefesten Anschlägen anliegen.

Analog zur Ausgestaltung der Verstellantriebe gemäß den Fig. 1 und 2 weisen die Übertragungshebel 73, 74 konzentrisch zur Verstellachse 10 gebogene Hebelfortsätze 731, 741 auf, die sich jeweils vom radialen Hebelarm 730, 740 des einen Übertragungshebels 73, 74 zum gebogenen Hebelfortsatz 731, 741 des anderen Übertragungshebels 73, 74 erstrecken und zueinander ausgerichtet sind. Auf den Hebelfortsätzen 731, 741 ist eine Rückstellfeder 93 angeordnet, die sich an den Kontaktnasen 732, 742 der Übertragungshebel 73, 74 abstützt und sowohl der Zentrierung bzw. Rückführung des Betätigungshebels als auch der Rückstellung des Schlingfederbandes 32 in die neutrale Ausgangsstellung dient.

Figur 4A zeigt in perspektivischer Darstellung das hohlzylindrische Verstellgehäuse 4 der Verstellvorrichtung mit seitlich abstehenden Flanschen zur Befestigung der Verstellvorrichtung an einem von zwei relativ zueinander verstellbaren Verstellelementen. Das Verstellgehäuse 4 ist konzentrisch um eine Verstellachse 10 angeordnet und umgibt einen konzentrisch zum Verstellgehäuse 4 angeordneten Antriebstopf 11, der mittels eines Betätigungshebels in der einen oder anderen Richtung um die Verstellachse 10 gedreht wird.

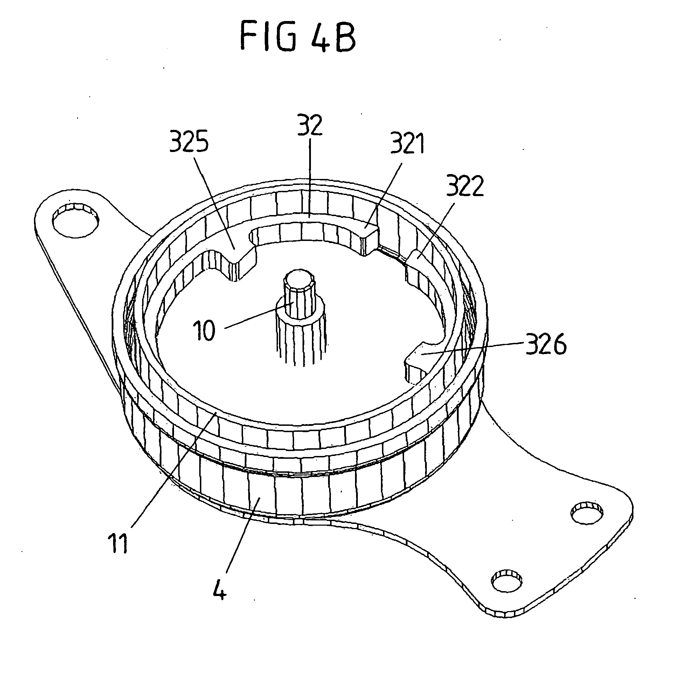

Figur 4B zeigt den Verstellantrieb nach Einlegen des Schlingfederbandes 32 mit den äußeren Federenden 321, 322 und den abgewinkelten Stützarmen 325, 326.

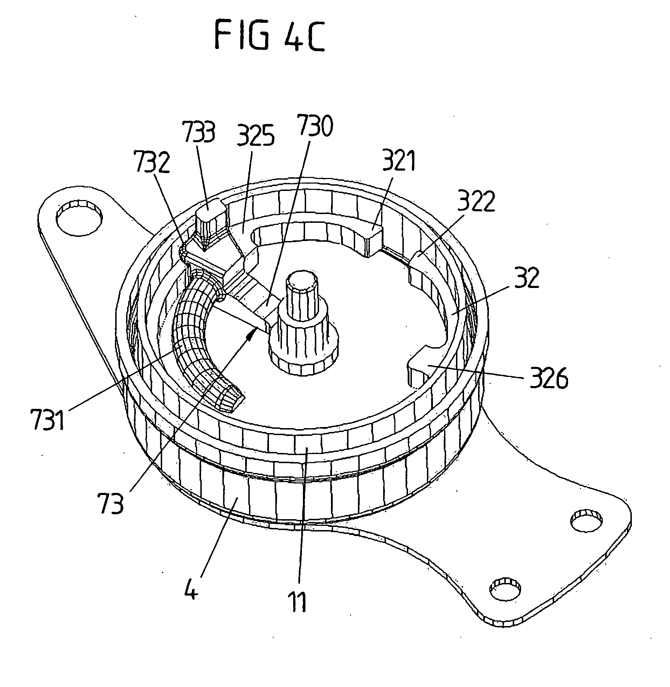

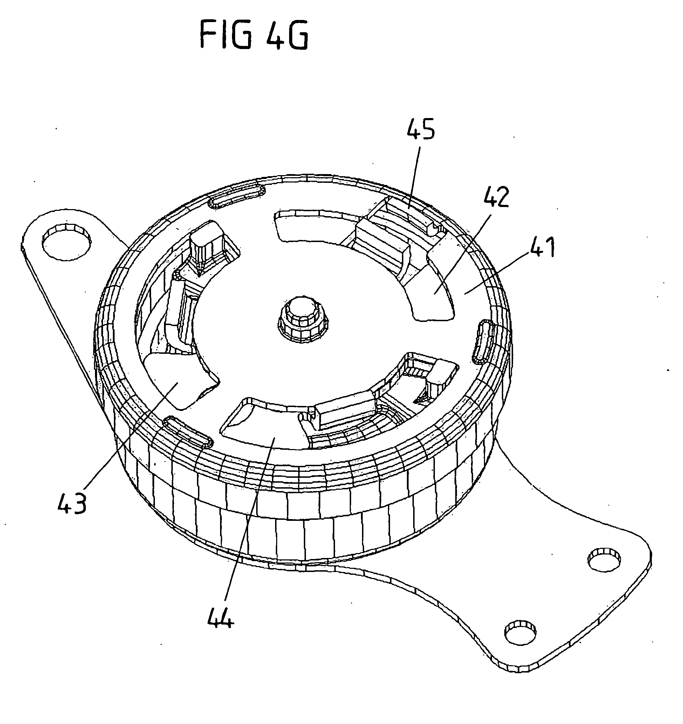

Figur 4C zeigt den Verstellantrieb nach Einsetzen des ersten Übertragungshebels 73, dessen radialer Hebelarm 730 einerseits mittels eines Flansches auf die Verstellachse 10 aufgesteckt ist und andererseits an seinem entgegengesetzten Ende die Kontaktnase 732 ausbildet, von der der Hebelfortsatz 731 ausgeht, der konzentrisch zur Verstellachse 10 verläuft. Die Kontaktnase 732 bildet einen Anschlag für den abgewinkelten Hebelarm 325 des Schlingfederbandes 32 aus und weist einen sich in axialer Richtung von der Kontaktnase 732 erstreckenden Nocken 733 auf, der gemäß Figur 4g mit einem gehäusefesten Anschlag zusammenwirkt.

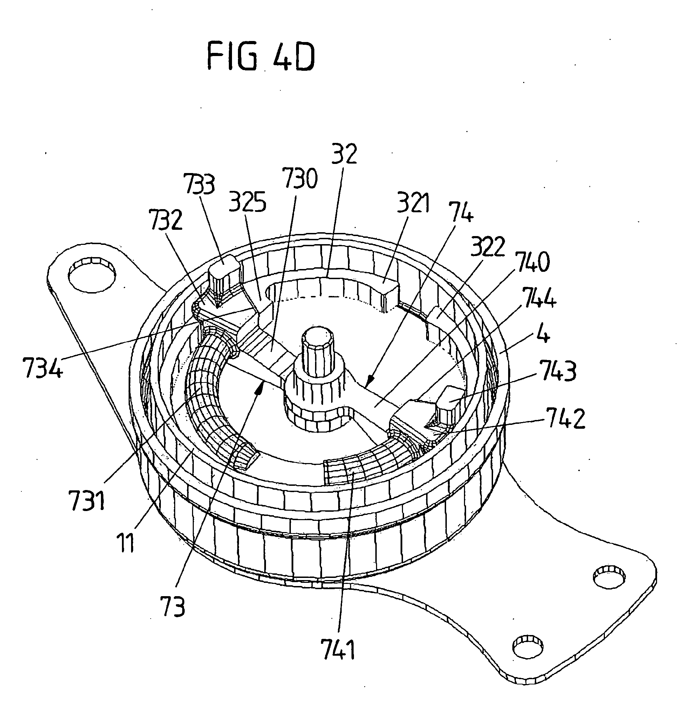

Figur 4D zeigt entsprechend Fig. 3A den Verstellantrieb nach Einsetzen des zweiten Übertragungshebels 74, der mit einem am radialen Hebelarm 740 ausgebildeten Flansch axial versetzt zum Flansch des radialen Hebelarms 730 des ersten Übertragungshebels 73 auf die Verstellachse 10 aufgesteckt ist. An dem den Flansch gegenüberliegenden Ende weist der Hebelarm 740 des zweiten Übertragungshebels 74 ebenfalls eine Kontaktnase 742 auf, von der sich ein Hebelfortsatz 741 konzentrisch zur Verstellachse 10 und fluchtend mit dem Hebelfortsatz 731 des ersten Übertragungshebels 73 erstreckt. Von der Kontaktnase 742 des zweiten Übertragungshebels 74 erstreckt sich in axialer Richtung ebenfalls ein Nocken 743, der analog zum Nocken 733 des ersten Übertragungshebels 73 gemäß Fig. 4G mit einem gehäusefesten Anschlag zusammenwirkt.

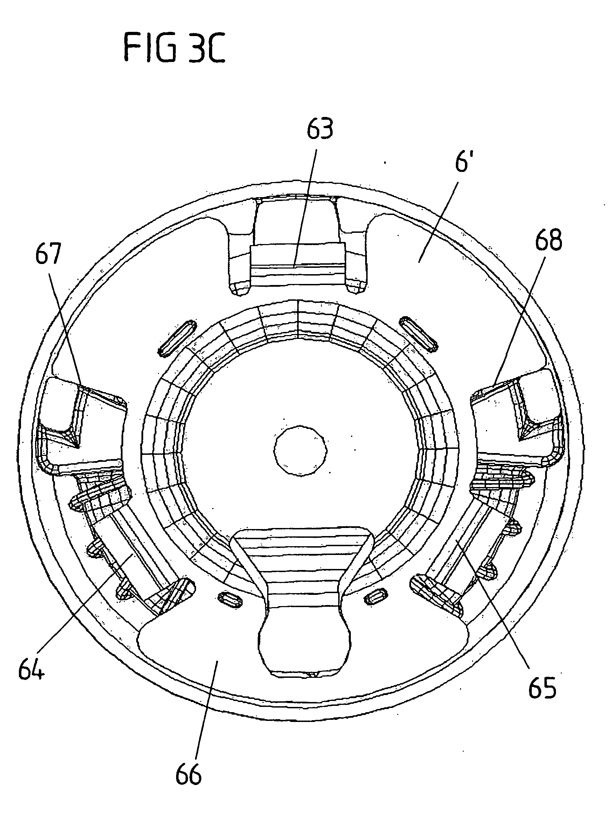

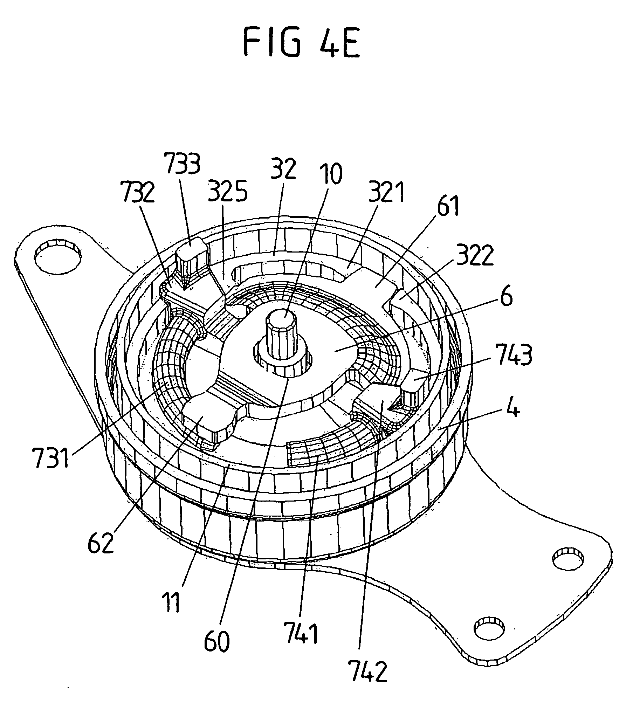

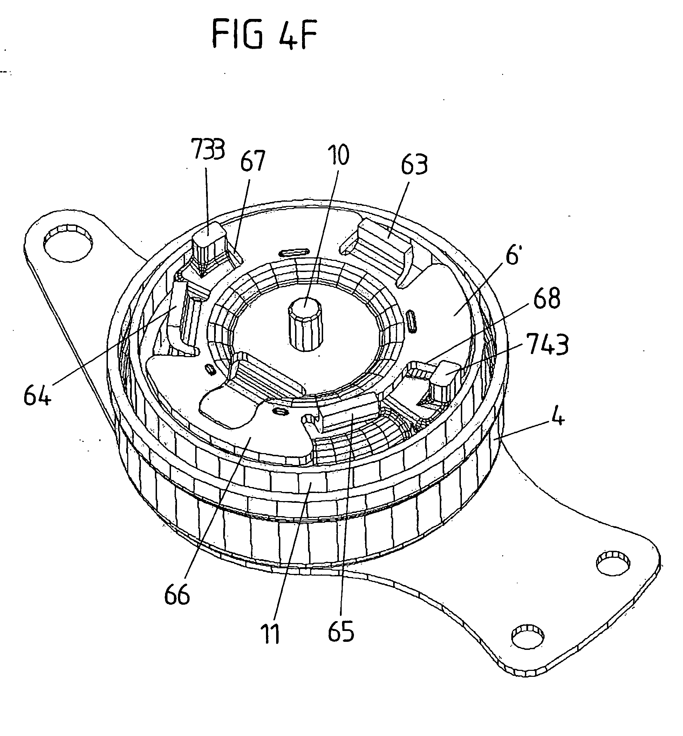

In Fig. 4E ist entsprechend Fig. 3B der Verstellantrieb nach Einsetzen eines ersten Verstärkerhebelteils 6 dargestellt, der mit einem Nocken 61 zwischen den äußeren Federenden 321, 322 des Schlingfederbandes 32 angeordnet ist und mit einem Langloch 60 auf die Verstellachse 10 aufgesteckt ist. An seinem dem Nocken 61 in Bezug auf die Verstellachse 10 gegenüberliegenden Ende weist der erste Verstärkungshebelteil 6 ein erstes Verbindungselement 62 auf, das entsprechend der Draufsicht gemäß Fig. 3C und der perspektivischen Darstellung gemäß Fig. 4F mit einem zweiten Verbindungselement 66 eines zweiten Verstärkungshebelteils 6' verbunden wird, das mit einer Bohrung auf die Verstellachse 10 aufgesteckt und mit dem ersten Verstärkungshebelteil 6 verbunden ist.

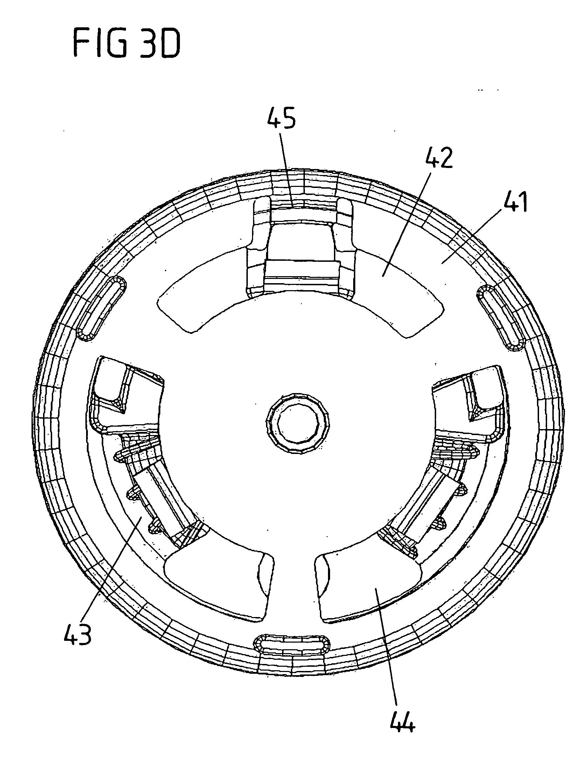

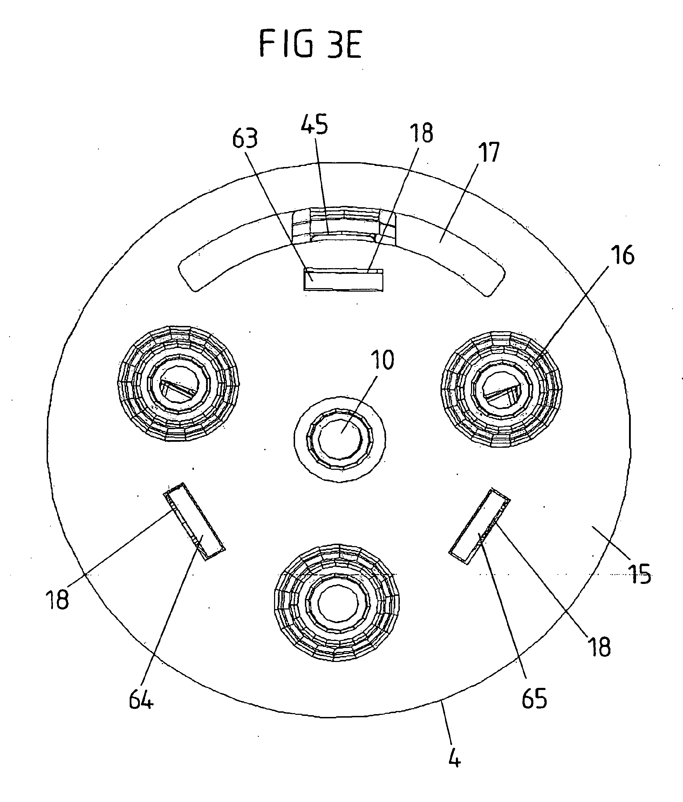

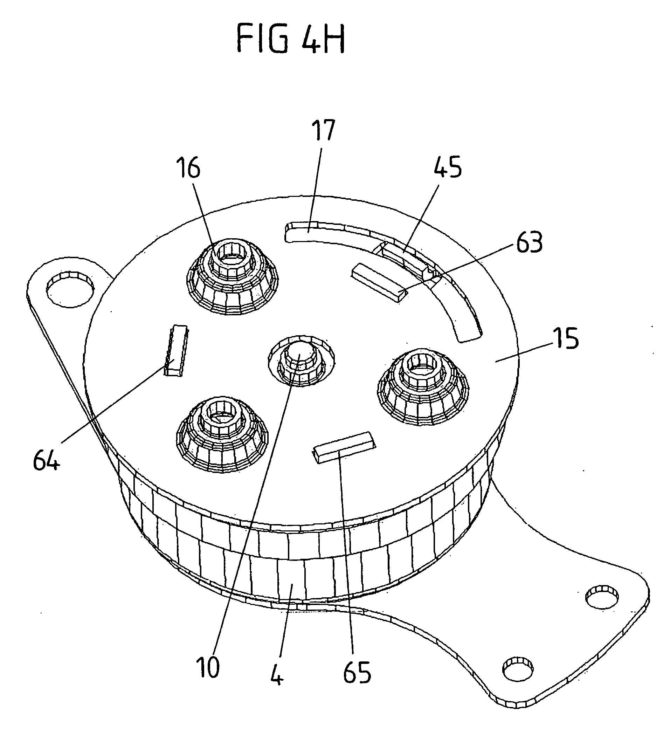

Das zweite Verstärkungshebelteil 6' weist zwei an den Anschlagnocken 733, 743 der Übertragungshebel 73, 74 anliegende Anschläge 67, 68 sowie drei von seiner Oberfläche abstehende, vorzugsweise von der Oberfläche abgewinkelte Stege 63, 64, 65 auf, die gemäß den Fig. 3D und 4G durch in Umfangsrichtung konzentrisch zur Verstellachse 10 verlaufende Schlitze 42, 43, 44 eines Gehäusedeckels 41 ragen und gemäß den Fig. 3E und 4H in Schlitze 18 einer Betätigungshebel-Anschraubplatte 15 gesteckt sind und dadurch eine Verbindung des zweiteiligen Verstärkungshebels 6, 6' mit der Betätigungshebel-Anschraubplatte 15 herstellen. Diese weist einen konzentrisch zur Verstellachse 10 verlaufenden weiteren Schlitz 17 auf, in dem ein von dem Gehäusedeckel 41 abstehender Steg 45 gemäß Figur 4G angeordnet ist und dessen Länge den Verstellhub eines Betätigungshebels bestimmt, der über drei Anschraubpunkte 16 mit der Betätigungshebel-Anschraubplatte 15 verbunden wird.

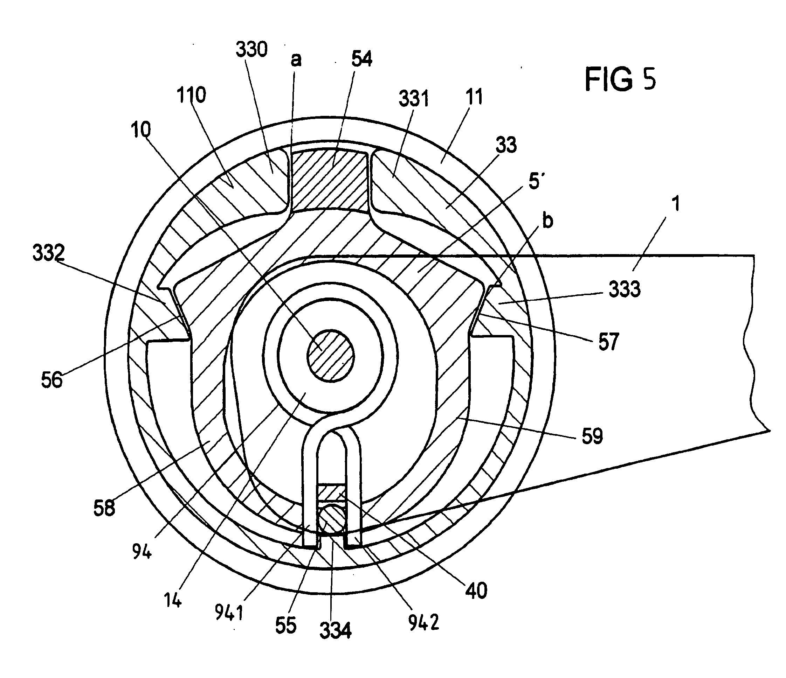

Der in Fig. 5 dargestellte Schnitt durch eine weitere Ausführungsform eines Verstellantriebs zur Erzeugung einer beidseitigen Drehbewegung zeigt einen um eine Verstellachse 10 drehbaren Antriebstopf 11 als angetriebenes Element mit einer hohlzylindrischen Anlagefläche 110 und mit einem um die Verstellachse 10 in der einen oder anderen Richtung schwenkbaren Betätigungshebel 1 als Antriebselement. Ein Schlingfederband 33 ist schwimmend in den hohlzylindrischen Innenraum des Antriebstopfes 11 mit Vorspannung eingesetzt und liegt unter dieser Vorspannung an der hohlzylindrischen Anlagefläche 110 des Antriebstopfes 11 an.

Zwischen den äußeren, verdickten Federenden 330, 331 des Schlingfederbandes 33 ist ein Nocken 54 eines Verstärkungshebels 5' mit geringem Spiel a zu einem der beiden äußeren Federenden 330, 331 angeordnet. Der Verstärkungshebel 5' ist symmetrisch zur Symmetrieachse des Verstellantriebs ausgebildet und weist zwei um die Verstellachse 10 geführte Schenkel 58, 59 auf, an denen diagonal zur Symmetrieachse des Verstellantriebs verlaufende Anlageflächen 56, 57 vorgesehen sind, denen korrespondierende Endflächen zweier abgewinkelter Stützarme 332, 333 des Schlingfederbandes 33 gegenüberstehen. Zwischen jeweils einer der beiden Anlageflächen 56, 57 des Verstärkungshebels 5' und der korrespondierenden Endfläche 332, 333 des Schlingfederbandes 33 ist ebenfalls ein geringes Spiel b ausgebildet.

Zwischen den beiden Schenkeln 58, 59 des Verstärkungshebels 5' ist eine Zentrier- und Rückstellfeder 94 um eine Zentrierhülse 14 gelegt, die konzentrisch zur Verstellachse 10 angeordnet ist. Die Federenden 941, 942 der Zentrier- und Rückstellfeder 94 liegen an einem gehäusefesten Anschlag 40, einem durch eine Öffnung des schwenkbaren Betätigungshebels 1 gesteckten Nocken 55 und einem Vorsprung 334 des Schlingfederbandes 33 in der neutralen Ausgangsstellung der Verstellvorrichtung an.

Wird der Betätigungshebel 1 in der einen oder anderen Richtung um die Verstellachse 10 verschwenkt, so wird durch die Wirkverbindung des Betätigungshebels 1 über die Öffnung im Betätigungshebel 1 und den Nocken 55 der Verstärkungshebel 5' in der Schwenkrichtung des Betätigungshebels 1 mitgedreht bis die Nase 54 des Verstärkungshebels 5' nach Überwindung des Spiels a an dem betreffenden Federende 330, 331 des Schlingfederbandes 33 und die betreffende Anlagefläche 56, 57 des Verstärkungshebels 5' an der korrespondierenden Endfläche 332, 333 des Schlingfederbandes 33 nach Überwindung des Spiels b zur Anlage kommt, das Schlingfederband 33 aufweitet und durch die Anlage der Außenseite des Schlingfederbandes 33 an der hohlzylindrischen Anlagefläche 110 der Antriebstopfes 11 diese in der Schwenkrichtung des Betätigungshebels 1 mitnimmt. Da sowohl der Nocken 55 des Verstärkungshebels 5' als auch der Vorsprung 334 des Schlingfederbandes 33 in der Schwenkrichtung des Betätigungshebels 1 mitgeführt werden, wird die Zentrier- und Rückstellfeder 94 infolge der Anlage eines der beiden äußeren Federenden 330, 331 aufgeweitet und gespannt.

Wird am Ende des Verstellhubes des Betätigungshebels 1 keine Kraft mehr auf den Betätigungshebel 1 ausgeübt, so drückt die Zentrier- und Rückstellfeder 94 den Verstärkungshebel 5' und das Schlingfederband 33 in die neutrale Ausgangsstellung zurück. Die Rückstellung erfolgt im Wesentlichen verspannungsfrei, da der Verstärkungshebel 5' keine Kraft auf die äußeren Federenden 330, 331 bzw. die abgewinkelten Federenden 332, 333 des Schlingfederbandes 33 ausübt, so dass dieses ohne wesentliche Reibung an der hohlzylindrischen Anlagefläche 110 des Antriebstopfes 11 in die neutrale Ausgangsstellung zurückbewegt wird.

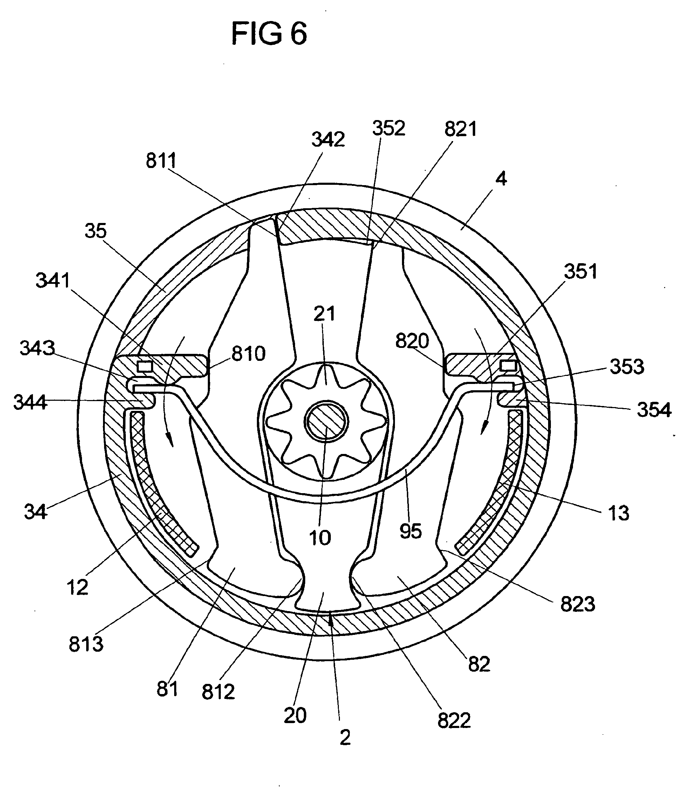

In Fig. 6 ist eine als Bremssperre ausgebildete Verstellvorrichtung im Querschnitt dargestellt, die ein abtriebsseitig eingeleitetes Drehmoment blockiert, sobald dieses größer ist als ein antriebsseitig eingeleitetes Drehmoment. In dieser Ausführungsform als Bremssperre werden ebenfalls Schlingfederbänder 34, 35 in Verbindung mit Verstärkungshebeln 81, 82 als Kraftübertragungselemente eingesetzt.

In einem Verstellgehäuse 4 sind zwei Schlingfederbänder 34, 35 in axialer Richtung zueinander versetzt angeordnet und liegen an der zylindrischen Innenwand des Verstellgehäuses 4 an. Abgewinkelte Stützarme 341, 351 der Schlingfederbänder 34, 35 liegen an einer mittleren Anlagefläche 810, 820 der beiden Verstärkungshebel 81, 82 an, die sekantenförmig zu beiden Seiten der Verstellachse 10 verlaufend im Verstellgehäuse 4 angeordnet sind. Äußere Federenden 342, 352 der Schlingfederbänder 34, 35 liegen an äußeren Anlageflächen 811, 821 der Verstärkungshebel 81, 82 an, die sich mit ihren in Bezug auf die Antriebsachse 10 gegenüberliegenden Anlagenasen 812, 822 an einem Abtriebshebel 20 des Abtriebselements 2 abstützen.

Die abgewinkelten Federenden 341, 351 der Schlingfederbänder 34, 35 weisen Aufnahmen 343, 353 auf, in die eine als Blattfeder ausgebildete Rückstellfeder 95 eingehängt ist und die Schlingfederbänder 34, 35 in Richtung der in die Fig. 6 eingetragenen Pfeile gegeneinander verspannt. Dabei drücken die beiden äußeren Federenden 342, 352 der Schlingfederbänder 34, 35 gegen die äußeren Anlageflächen 811, 821 der Verstärkungshebel 81, 82, wodurch deren mittlere Anlageflächen 810, 820 gegen die abgewinkelten Federenden 341, 351 und die Anlagenasen 812, 822 der Verstärkungshebel 81, 82 gegen den Abtriebshebel 20 gedrückt werden. Damit wird sowohl ein spielfreier Abtrieb als auch ein Anpressen der Schlingfederbänder 34, 35 an die hohlzylindrische Innenfläche des Verstellgehäuses 4 gewährleistet.

Die mit einem Antriebselement und insbesondere mit dem Antriebstopf 11 gemäß den Fig. 1 und 2 verbundenen, kreissektorförmigen Antriebsklauen 12, 13 ragen in das Verstellgehäuse 4 hinein und liegen mit ihren Stirnkanten zwischen einem Anschlag 344, 354 der abgewinkelten Stützarme 341, 351 der Schlingfederbänder 34, 35 und Anschlägen 813, 823 der Verstärkungshebel 81, 82.

Beim Einwirken eines abtriebseitigen Gegendrehmoments im Uhrzeigersinn drückt der Abtriebshebel 20 des Abtriebselements 2 gegen die Anlagenase 812 des einen Verstärkungshebels 81, so dass dieser Verstärkungshebel 81 bestrebt ist, sich ebenfalls im Uhrzeigersinn zu drehen. Dadurch drücken die äußere und die mittlere Anlagefläche 810, 811 dieses Verstärkungshebels 81 gegen die Federenden 341, 342 des einen Schlingfederbandes 34. Während die von der äußeren Anlagefläche 811 des Verstärkungshebels 81 auf das äußere Federende 342 des Schlingfederbandes 34 einwirkende Kraft bestrebt ist, das Schlingfederband 34 im Uhrzeigersinn zu drehen, bewirkt die von der mittleren Anlagefläche 810 auf das abgewinkelte Federende 341 des Schlingfederbandes 34 ausgeübte Kraft in Verbindung mit der durch die Anlage des Schlingfederbandes 34 an der hohlzylindrischen Innenfläche des Verstellgehäuses 4 erzeugte Reibungskraft einen Selbsthemmeffekt, so dass die Bremssperre in dieser Lage fixiert ist und damit das abtriebsseitig eingeleitete Gegenmoment ohne entgegengerichtetes Antriebsmoment blockiert.

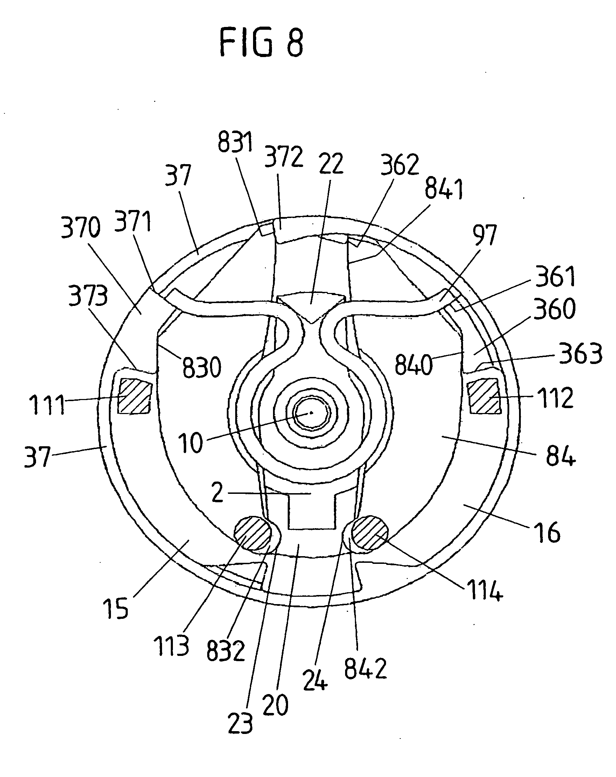

Wird der Antriebstopf 11 gemäß Fig. 6 entgegen dem Uhrzeigersinn gedreht, so führt dies in der Bremssperre zu einer Drehung der Antriebsklauen 12, 13 entgegen dem Uhrzeigersinn. Dabei drückt die Stirnkante der Antriebsklaue 13 gegen den Anschlag 354 des abgewinkelten Federendes 351 des nicht belasteten Schlingfederbandes 35 und hebt es geringfügig an, bevor die Antriebsklaue 12 gegen den Anschlag 813 des Verstärkungshebels 81 und dieser über seine Anlagenase 812 gegen den Abtriebshebel 20 drückt, wodurch das eingeleitete Abtriebsmoment direkt durch das Antriebsmoment ausgeglichen werden kann. Statt über den unteren Teil des Verstärkungshebels 81 kann die Kraft gemäß den nachstehend anhand der Fig. 8 bis 10 beschriebenen Ausführungsbeispiele auch durch eine Verlängerung der Antriebsklauen 12, 13 direkt auf den Abtriebshebel 20 übertragen werden.

Die Bremssperre kann sich somit dem entgegen dem Uhrzeigersinn wirkenden Antriebsmoment folgend drehen und das antriebsseitige, über die Antriebsklauen 12, 13 übertragene Drehmoment auf das Abtriebselement 2 übertragen.

Werden das Antriebselement und damit die Antriebsklauen 12, 13 in Richtung des abtriebseitigen Gegendrehmoments, d. h. im Uhrzeigersinn gedreht, so drückt die Stirnseite der einen Antriebsklaue 12 gegen den Anschlag 344 des in Folge des abtriebseitigen Gegendrehmoments verspannten Schlingfederbandes 34. Dadurch wird der Selbsthemmeffekt des Schlingfederbandes 34 aufgehoben und das Abtriebselement 2 und damit das einerseits mit dem Abtriebshebel 20 und andererseits mit einer Verstelleinrichtung - wie beispielsweise einer Sitzverstellung - verbundene Abtriebsritzel 21 kann sich ebenfalls im Uhrzeigersinn drehen.

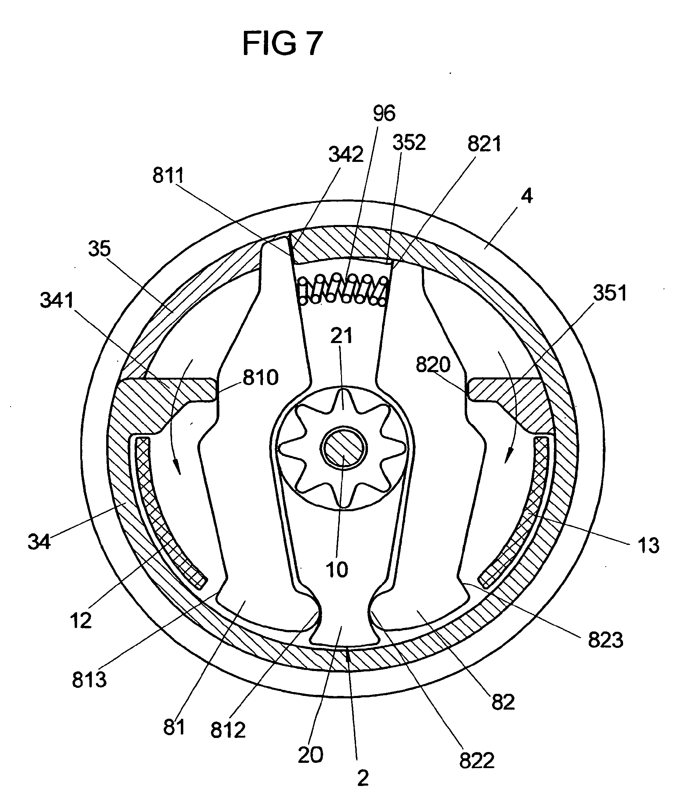

Fig. 7 zeigt einen der Bremssperre gemäß Fig. 6 entsprechenden Schnitt durch eine Bremssperre, bei der anstelle einer gebogenen Blattfeder eine zwischen den äußeren Anlageflächen 811, 821 der Verstärkungshebel 81, 82 angeordnete Druckfeder 96 als Rückstellfeder vorgesehen ist. Die abgewinkelten Stützarme 341, 351 der Schlingfederbänder 34, 35 weisen in dieser Ausführungsform wegen der nicht vorgesehenen, gebogenen Blattfeder keine der Anordnung gemäß Fig. 6 entsprechende Ausnehmungen auf und bilden entsprechende Anschläge für die Antriebsklauen 12, 13 bzw. Anlageflächen für die mittleren Anlageflächen 810, 820 der Verstärkungshebel 81, 82 aus.

Die in Fig. 8 in einer Draufsicht dargestellte Ausführungsform einer als Bremssperre ausgebildeten Verstellvorrichtung dient ebenfalls dazu, ein abtriebsseitig eingeleitetes Drehmoment, das größer ist als ein antriebsseitig eingeleitetes Drehmoment, zu blockieren, ein antriebsseitiges Drehmoment, das größer als ein abtriebsseitiges Drehmoment ist, aber zum Abtrieb zu übertragen.

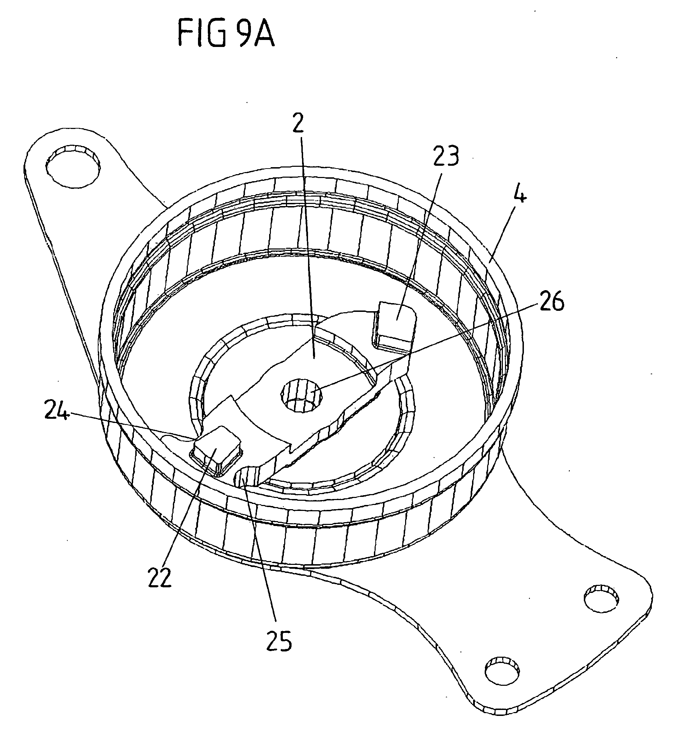

Zum besseren Verständnis ist die Bremssperre in Fig. 8 komplett montiert in einer Draufsicht dargestellt, während die Figuren 9A bis 9F einzelnen Montagephasen der Bremssperre zeigen, um die Zuordnung der einzelnen Funktionselemente der Bremssperre zu verdeutlichen.

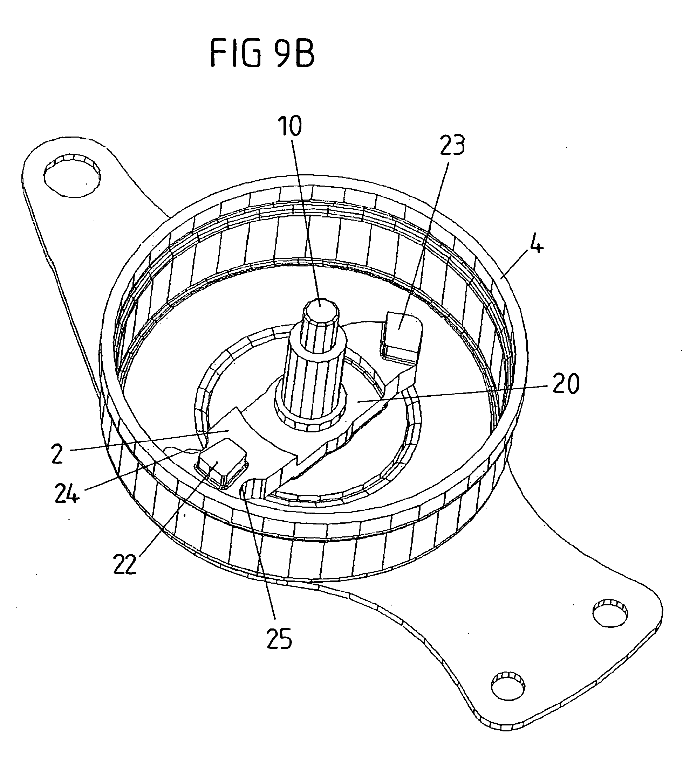

Fig. 9A zeigt das hohlzylindrische Verstellgehäuse 4, in dessen Boden der Abtriebshebel 20 des Abtriebselements 2 eingesetzt wird, das an seinem einen Ende eine Rückstellfederführung 23 und an seinem anderen Ende einen Abtriebsnocken 22 sowie beidseitig des Abtriebsnockens 22 angeordnete Ausnehmungen 24, 25 sowie eine mittige Bohrung 26 zur Aufnahme der Verstellachse 10 gemäß Fig. 9B aufweist.

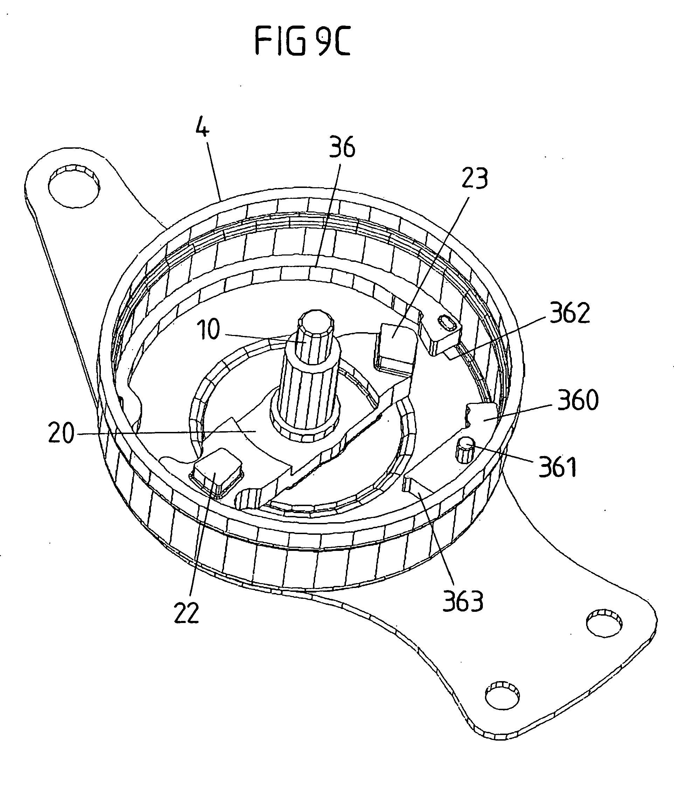

Fig. 9C zeigt die Bremssperre nach dem Einlegen eines ersten Schlingfederbandes 36, das an der zylindrischen Innenwand des Verstellgehäuses 4 anliegt. Das Schlingfederband 36 weist an seinem einen Ende das äußere, verdickte Federende 362 sowie an seinem anderen Ende eine Anlageplatte 360 auf, von der in axialer Richtung ein Anlagestift 361 absteht und die in Umfangsrichtung eine Anlagefläche 363 ausgebildet, die den Anlageflächen der abgewinkelten Stützarme 341, 351 der Schlingfederbänder 34, 35 in den Ausführungsbeispielen gemäß den Fig. 6 und 7 entsprechen.

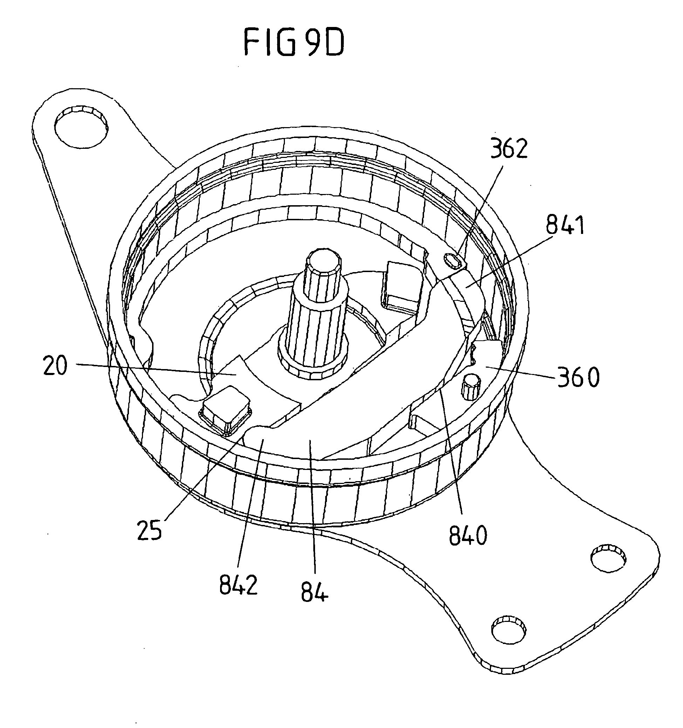

Fig. 9D zeigt die Bremssperre nach Einsetzen eines ersten Verstärkungshebels 84, der mit seiner äußeren Anlagefläche 841 an dem äußeren Federende 362 des Schlingfederbandes 36 anliegt. Eine mittlere Anlagefläche 840 des Verstärkungshebels 84 liegt an der Anlageplatte 360 des Schlingfederbandes 36 an, während das andere Ende des Verstärkungshebels 84 eine Anschlagnase 842 ausbildet, die in die Ausnehmung 25 des Abtriebselements 2 eingreift.

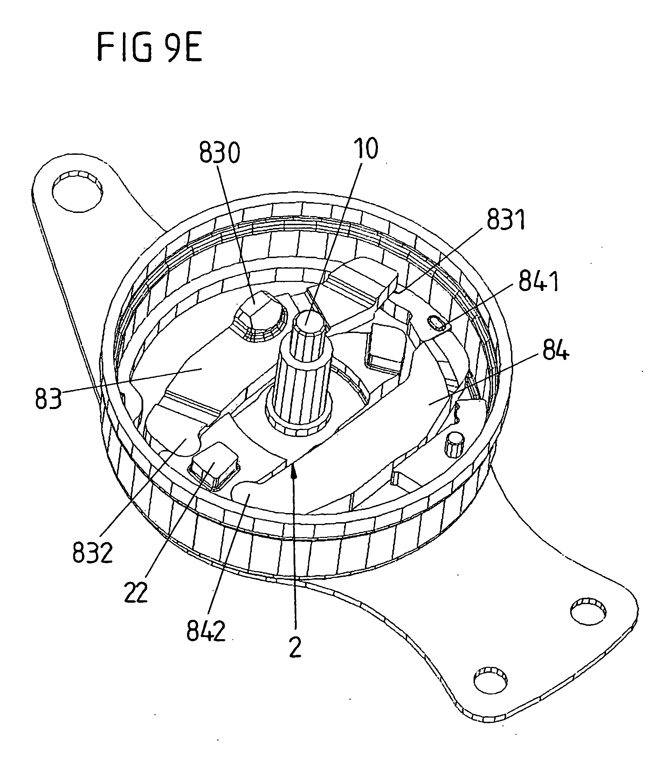

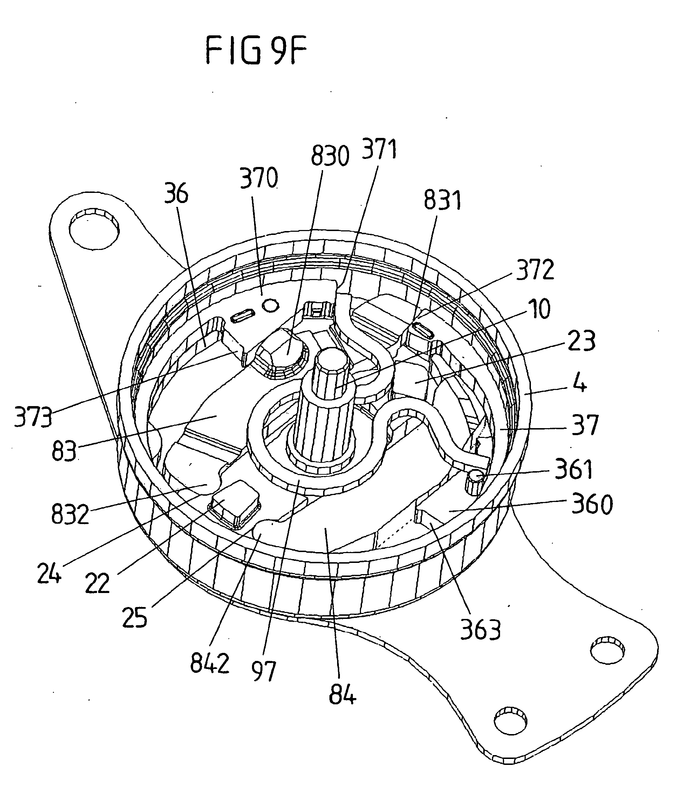

Fig. 9E zeigt die Bremssperre nach Einsetzen eines zweiten Verstärkungshebels 83 in das hohlzylindrische Verstellgehäuse 4 der Bremssperre. Der zweite Verstärkungshebel 83 weist ebenfalls eine äußere Anlagefläche 831 an seinem einen Ende sowie eine Anschlagnase 832 an seinem anderen Ende auf, die in die Ausnehmung 24 des Abtriebselements 2 eingreift. Eine als Nocken ausgebildete mittlere Anlagefläche 830 steht senkrecht von der Oberfläche des zweiten Verstärkungshebels 83 ab und dient zum Verspannen des beim Einwirken eines abtriebseitigen Drehmoments. Das zweite Schlingfederband 37 wird gemäß Fig. 9F in das hohlzylindrische Verstellgehäuse 4 eingesetzt, so dass sein äußeres Federende 372 zur Anlage an die äußere Anlagefläche 831 des zweiten Verstärkungshebels 83 kommt.

Eine dem abgewinkelten Federende der Schlingfederbänder in den Ausführungsformen gemäß den Fig. 6 und 7 entsprechende Anlageplatte 370 bildet zum einen eine Anlagefläche für die mittlere Anlagefläche bzw. den senkrecht vom zweiten Verstärkungshebel 83 abstehenden Anlagenocken 830 und zum anderen eine Anlagefläche 373 für ein in Fig. 8 dargestelltes Steuerelement 111 des Antriebstopfes bzw. des angetriebenen Elements sowie eine Anlagefläche 371 für eine als Omega-Feder ausgebildete Rückstellfeder 97 aus, deren anderes Ende am Anlagestift 361 des ersten Schlingfederbandes 36 anliegt und damit die Schlingfederbänder 36, 37 in Umfangsrichtung vorspannt. Die Omega-Feder 97 ist so in das Verstellgehäuse 4 eingesetzt, dass ihre seitlich abstehenden Schenkel an der senkrecht von der Oberfläche des Abtriebshebels abstehenden Rückstellfederführung 23 anliegen.

Fig. 8 zeigt die komplett montierte Bremssperre in einer Draufsicht nach dem Einsetzen des Antriebstopfes bzw. angetriebenen Elements, von dem in Fig. 8 die hiervon abstehenden Steuerelemente 111 bis 114 geschnitten dargestellt sind. Die Steuerelemente 111 bis 114 stehen mit Drehwinkelspiel zum einen den Anlageflächen 363, 373 der Schlingfederbänder 36, 37 und zum anderen dem Anschlagnocken 22 des Abtriebselements 2 gegenüber. Im Unterschied zu den in den Fig. 6 und 7 dargestellten Ausführungsformen einer Bremssperre liegen die Steuerelemente 113, 114 nicht an den Anschlägen 813, 823 der Verstärkungshebel 83, 84, sondern unmittelbar am Antriebsnocken 22 des Abtriebselements 2 an.

Beim Einwirken eines abtriebseitigen Gegendrehmoments im Uhrzeigersinn drückt der Abtriebshebel 20 des Abtriebselements 2 gegen die Anschlagnase 832 des einen Verstärkungshebels 83, so dass dieser Verstärkungshebel 83 bestrebt ist, sich ebenfalls im Uhrzeigersinn zu drehen. Dadurch drücken der Anlagenocken 830 und die äußere Anlagefläche 831 des Verstärkungshebels 83 gegen die Anlageplatte 370 und das äußere Federende 372 des Schlingfederbandes 37. Während die von der äußeren Anlagefläche 831 des Verstärkungshebels 83 auf das äußere Federende 372 des Schlingfederbandes 37 einwirkende Kraft bestrebt ist, das Schlingfederband 37 im Uhrzeigersinn zu drehen, bewirkt die vom Anlagenocken 830 auf die Anlageplatte 370 des Schlingfederbandes 37 ausgeübte Kraft in Verbindung mit der durch die Anlage des Schlingfederbandes 37 an der hohlzylindrischen Innenfläche des Verstellgehäuses 4 erzeugte Reibungskraft einen Selbsthemmeffekt, so dass die Bremssperre in dieser Lage fixiert ist und damit das abtriebsseitig eingeleitete Gegenmoment ohne entgegengerichtetes Antriebsmoment blockiert.

Wird der Antriebstopf 11 entgegen dem Uhrzeigersinn gedreht, so führt dies in der Bremssperre zu einer Drehung der Steuerelemente 111 bis 114 entgegen dem Uhrzeigersinn. Dabei drückt das Steuerelement 112 gegen den Anschlag 363 der Anlageplatte 360 des nicht belasteten Schlingfederbandes 36 und hebt es geringfügig an, bevor das Steuerelement 113 gegen den Nocken 22 des Abtriebshebels 20 drückt, wodurch ein Abtriebsmoment direkt durch das Antriebsmoment ausgeglichen werden kann. Die Bremssperre kann sich somit dem entgegen dem Uhrzeigersinn wirkenden Antriebsmoment folgend drehen und das antriebsseitige Drehmoment auf das Abtriebselement 2 übertragen.

Werden das Antriebselement und damit die Steuerelemente 111 bis 114 in Richtung des abtriebseitigen Gegendrehmoments, d. h. im Uhrzeigersinn gedreht, so drückt das Steuerelement 111 gegen den Anschlag 373 des in Folge des abtriebseitigen Gegendrehmoments verspannten Schlingfederbandes 37. Dadurch wird der Selbsthemmeffekt des Schlingfederbandes 37 aufgehoben und das Steuerelement 114 kann den Abtriebshebel 20 und damit das Abtriebselement 2 ebenfalls im Uhrzeigersinn drehen.

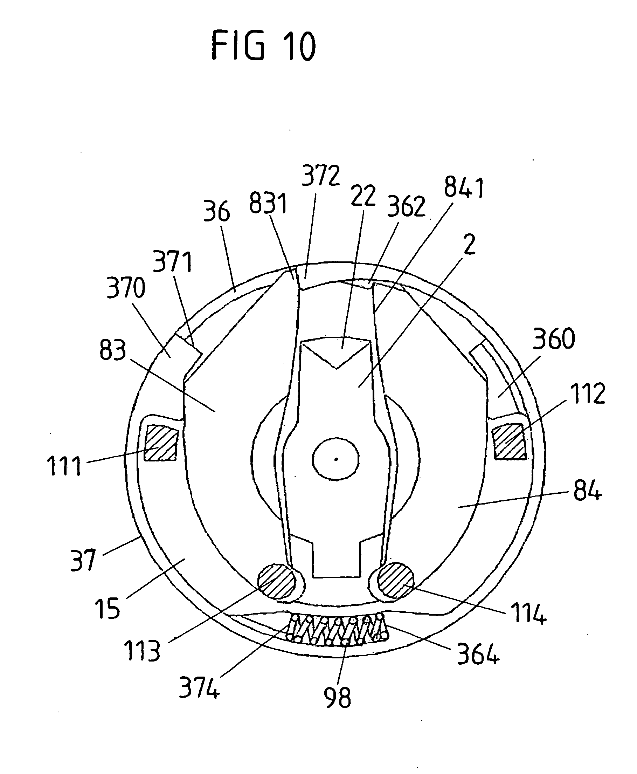

Die in Fig. 10 in einem schematischen Schnitt dargestellte Bremssperre unterscheidet sich von der Ausführungsform gemäß den Fig. 8 und 9 lediglich dadurch, dass anstelle einer Omega-Feder als Rückstellfeder eine Druckfeder 98 vorgesehen ist, die zwischen Anlagenasen 364, 374 der Schlingfederbänder 36, 37 angeordnet ist.

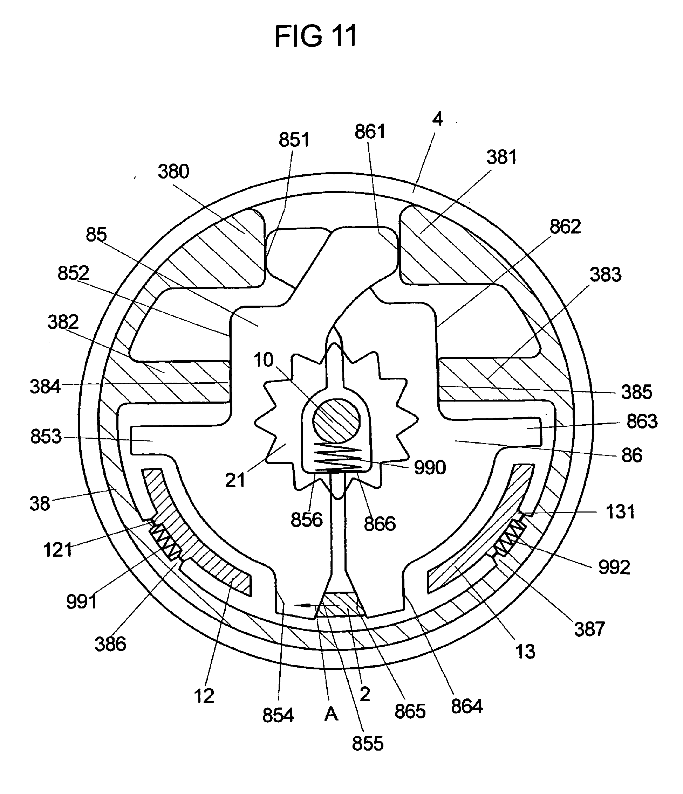

Fig. 11 zeigt einen Querschnitt durch eine ebenfalls als Bremssperre ausgebildete Verstellvorrichtung, die ein abtriebsseitig eingeleitetes Drehmoment blockiert, sobald dieses größer ist als ein antriebsseitig eingeleitetes Drehmoment, wobei im Unterschied zu den Bremssperren gemäß den Fig. 6 bis 10 nur ein Schlingfederband 38 als Kraftübertragungselement eingesetzt wird.

Zwischen den verdickten Federenden 380, 381 des Schlingfederbandes 38 sind die an einem Ende zweier Verstärkungshebel 85, 86 vorgesehenen äußeren Anlageflächen 851, 861 angeordnet. Die beiden Verstärkungshebel 85, 86 sind symmetrisch zur Symmetrieachse der Bremssperre zu beiden Seiten der Verstellachse 10 in das Schlingfederband 38 eingesetzt, wobei die äußeren Anlageflächen 851, 861 der Verstärkungshebel 85, 86 spielfrei an den verdickten äußeren Federenden 380, 381 des Schlingfederbandes 38 anliegen.

Die dem als Abtriebsnocken ausgebildeten Abtriebselement 2 zugeordneten gegenüberliegenden Enden der Verstärkungshebel 85, 86 liegen mit ihren konischen Anlageflächen 855, 865 am Abtriebselement 2 an. Durch ein Federelement 990, das sich einerseits an der Verstellachse 10 und andererseits an Stützflächen 856, 866 der Verstärkungshebel 85, 86 abstützt, wird die Spielfreiheit der Bremssperre gewährleistet, wobei die Verstärkungshebel 85, 86 an den äußeren Federenden 380, 381, Anschlagflächen 384, 385 abgewinkelter Stützarme 382, 383 des Schlingfederbandes 38 und mit den konischen Anlageflächen 855, 865 am Abtriebselement 2 anliegen.

Die mit einem angetriebenen Element, insbesondere mit dem Antriebstopf 11 gemäß den Antriebsvorrichtungen der Fig. 1 bis 5 verbundenen, kreissektorförmigen Antriebsklauen 12, 13 ragen in das Verstellgehäuse 4 hinein und liegen mit ihren Stirnkanten zwischen jeweils einem Anschlag 853, 863 und äußeren Anlageflächen 854, 864 der Verstärkungshebel 85, 86. Zwischen den Antriebsklauen 12, 13 und der Innenseite des Schlingfederbandes 38 sind Mitnahmefedern 991, 992 angeordnet, die in Umfangsrichtung an Anschlägen 121, 131 der Antriebsklauen 12, 13 sowie beidseitigen Anschlägen 386, 387 des Schlingfederbandes 38 anliegen.

Wirkt auf die Bremssperre ein abtriebsseitiges Gegenmoment im Uhrzeigersinn, d.h. in Richtung des an den Antriebsnocken 2 eingetragenen Pfeils A, und das von den Antriebsklauen 12, 13 ausgehende Antriebsmoment in der Gegenrichtung, so stößt die Antriebsklaue 13 nach Überbrückung des geringen Spiels gegen die Anlagefläche 863 und zieht damit den Verstärkungshebel 86 in Richtung auf das abgewinkelte Federende 383 des Schlingfederbandes 38. Infolge der konisch verlaufenden Schrägflächen des Abtriebsnockens 2 und der äußeren Anlagefläche 864 des Verstärkungshebels 86 wird der Verstärkungshebel 86 entlang dieser Schräge bewegt, so dass die durch die Spannfeder 990 bewirkte Verspannung des Schlingfederbandes 38 gelöst wird.

Nachdem die Antriebsklauen 12, 13 einen weiteren kleinen Drehwinkel zurückgelegt haben, berührt die Antriebsklaue 12 die äußere Anlagefläche 854 des Verstärkungshebels 85 und drückt über diese äußere Anlagefläche 854 gegen den Abtriebsnocken 2, so dass dieser in Antriebsrichtung und damit entgegen der Richtung des abtriebsseitigen Drehmoments bewegt wird. Dabei üben die zwischen den Antriebsklauen 12, 13 und dem Schlingfederband 38 angeordneten Mitnahmefedern 991, 992 eine Mitnahmekraft auf das Schlingfederband 38 aus, so dass sich das Schlingfederband 38 bei der Bewegung der Antriebsklauen 12, 13 mitbewegen möchte und die Reibung zwischen dem Schlingfederband 38 und dem Verstellgehäuse 4 leicht überwunden wird.

Für die Mitnahme des Schlingfederbandes 38 bei einer Bewegung der Antriebsklauen 12, 13 ist alternativ auch die Anordnung einer einzelnen Mitnahmefeder zwischen einer der beiden Antriebsklauen 12, 13 und dem Schlingfederband 38 ausreichend.

### Bezugszeichenliste

| | |
|---|---|
| 1 | Antriebselement (Betätigungshebel) |
| 2 | Abtriebselement |
| 4 | Verstellgehäuse (Bremsgehäuse) |
| 5, 5' | Verstärkungshebel des Verstellantriebs |
| 6, 6' | Zweiteiliger Verstärkungshebel des Verstellantriebs |
| 10 | Verstellachse |
| 11 | Angetriebenes Element (Antriebstopf) |
| 12, 13 | Antriebsklaue |
| 14 | Zentrierhülse |
| 15 | Betätigungshebel-Anschraubplatte |
| 16 | Anschraubpunkte |
| 17, 18 | Schlitz |
| 20 | Abtriebshebel |
| 21 | Abtriebsritzel |
| 22 | Abtriebsnocken |
| 23 | Rückstellfederführung |
| 24, 25 | Ausnehmungen |
| 26 | Bohrung |
| 31 - 38 | Schlingfederband |
| 40 | gehäusefester Anschlag |
| 41 | Gehäusedeckel |
| 42 - 44 | Schlitze |
| 45 | Steg |
| 50 | Langloch |
| 51, 52, 54, 55 | Nocken des Verstärkungshebels |
| 53 | Verbindungsbolzen |
| 56, 57 | Anlagefläche |
| 58, 59 | Schenkel |
| 60 | Langloch |
| 61 | Nocken |
| 62 | erstes Verbindungsteil |
| 63, 64, 65 | Stege |
| 66 | zweites Verbindungsteil |
| 67, 68 | Anschläge |
| 71, 72, 73, 74 | Übertragungshebel |
| 81 - 86 | Verstärkungshebel der Bremssperre |
| 91 - 98 | Rückstellfeder |
| 110 | Anlagefläche des Antriebstopfes |
| 111 - 114 | Steuerelemente des Antriebstopfes |
| 310, 311, 321, 322, 330, 331, 342, 352, 362, 372, 380, 381 | Äußeres (Verdicktes) Federende |
| 312, 313, 323, 324 | zweites Federende |
| 314, 315, 325, 326, 332, 333, 341, 344, 351, 354, 362, 363, 382, 383 | Abgewinkelter Stützarm |
| 316, 317 | Crackverbindung |
| 318,319 | Steg |
| 334 | Vorsprung |
| 343, 353 | Aufnahme |
| 344, 354, 386, 387 | Anschlag |
| 360, 370 | Anlageplatte |
| 361 | Anlagestift |
| 363, 371, 373 | Anlagefläche |
| 364,374 | Anlagenase |
| 366, 367 | Anschlag |
| 384, 385 | Anschlagfläche |
| 710,720,730,740 | Radialer Hebelarm |
| 711, 721 | Zweiter Hebelarm |
| 712, 713, 722, 723,731,741 | Hebelfortsatz |
| 714, 724, 732, 742 | Kontaktnasen |
| 733, 743 | Nocken |
| 810, 820, 830, 840, 842 | Mittlere Anlagefläche |
| 811, 821, 831, 841, 851,861 | Äußere Anlagefläche |
| 812,822,834, 835, 844, 845, | Anlagenase |
| 813, 823, 833, 843, 853, 863 | Anschlag |
| 832, 842 | Anschlagnase |
| 836, 846, 856, 866 | Stützfläche |
| 854, 864 | Anlageflächen |
| 855, 865 | konische Anlagefläche |
| 990 | Federelement |
| 991, 992 | Mitnahmefedern |
| 941,942 | Federenden |

## Patentansprüche

1. Verstellvorrichtung zur Erzeugung einer beidseitigen Drehbewegung, insbesondere für Fensterheber und Sitzverstellungen in Kraftfahrzeugen, mit einem Verstellgehäuse (4), einem um eine Verstellachse (10) schwenkbaren Antriebselement (1), einem durch Betätigen des Antriebselementes (1) winkelverstellbaren angetriebenen Element (11) mit einer hohlzylindrischen Anlagefläche, einem Abtriebselement (2), einem im Kraftfluss zwischen dem Antriebselement (1) und dem angetriebenen Element (11) angeordneten Verstellantrieb, der eine Verstellbewegung des Antriebselements (1) nur dann auf das angetriebene Element (11) überträgt, wenn das Antriebselement (1) aus einer neutralen Ausgangsstellung in die eine oder andere Richtung bewegt wird, und mit einer zwischen dem angetriebenen Element (11) und dem Abtriebselement (2) angeordneten Bremssperre, die ein abtriebsseitig eingeleitetes Drehmoment blockiert und mit mindestens einem Schlingfederband (31 - 38),
**dadurch gekennzeichnet,**
**dass** der Verstellantrieb und/oder die Bremssperre das mindestens eine Schlingfederband (31 - 38) enthält bzw. enthalten, das einen Umfang von weniger als 360° und Anlageflächen zur Kraftübertragung vom Antriebselement (1) zum angetriebenen Element (11) oder vom angetriebenen Element (11) zum Abtriebselement (2) oder vom Abtriebselement (2) zum Verstellgehäuse (4) aufweist.

2. Verstellvorrichtung nach Anspruch 1, **dadurch gekennzeichnet, dass** der Verstellantrieb und/oder die Bremssperre einen mit dem Antriebselement (1) wirkverbundenen Verstärkungshebel (5, 5'; 6, 6'; 81 - 86) und ein mit Vorspannung zumindest teilweise an der hohlzylindrischen Anlagefläche (110) des angetriebenen Elements (11) und/oder des Verstellgehäuses (4) anliegendes Schlingfederband (31 - 38) aufweist, dessen Federenden (310 - 313; 321 - 324; 330, 331, 342, 352, 362, 372, 380, 381) mit dem Verstärkungshebel (5, 5'; 6, 6'; 81 - 86) wirkverbunden sind.

3. Verstellvorrichtung nach Anspruch 2, **dadurch gekennzeichnet, dass** der Verstärkungshebel (5, 5'; 6, 6'; 81 - 86)
- mit Spiel um die Verstellachse (10) drehbar ist,
- mindestens einen zwischen den Federenden (310 - 313; 321 - 324; 330, 331) des Schlingfederbandes (31 - 33) positionierten Nocken (51, 52; 54; 61) aufweist, der zur Übertragung eines durch Verschwenken des Antriebselements (1, 1') aus der neutralen Ausgangsstellung vom Antriebselement (1, 1') ausgehenden Antriebsmoments das Schlingfederband (31 - 33) derart aufweitet, dass es reibschlüssig an der hohlzylindrischen Anlagefläche (110) des angetriebenen Elements (11) anliegt,
- und mit Übertragungshebeln (71 - 74) wirkverbunden ist, die beim Zurückstellen des Antriebselements (1, 1') von der ausgelenkten Stellung in die neutrale Ausgangsstellung auf vom Schlingfederband (31 - 33) abgewinkelte Stützarme (314, 315; 325, 326; 332, 333) derart einwirken, dass das Schlingfederband (31 - 33) zusammengezogen und seine reibschlüssige Anlage an der hohlzylindrischen Anlagefläche (110) des angetriebenen Elements (11) aufgehoben wird.

4. Verstellvorrichtung nach Anspruch 3, **dadurch gekennzeichnet, dass** zwei an der Verstellachse (10) angelenkte Übertragungshebel (71 - 74) radial von der Verstellachse (10) ausgehende Hebelarme (710, 720, 730, 740) aufweisen, die einem abgewinkelten Stützarm (314, 315, 325, 326, 332, 333) des Schlingfederbandes (31 - 33) zugeordnet sind, an einem gehäusefesten Anschlag anliegen und mit dem Verstärkungshebel (5, 6, 6') wirkverbunden sind und dass zwischen den Übertragungshebeln (71 - 74) mindestens eine Rückstellfeder (91 - 93) angeordnet ist, die zum Rückstellen des Schlingfederbandes (31 - 33) und des mit dem Verstärkungshebel (5, 6, 6') verbundenen Antriebselements (1, 1') in Abhängigkeit von der Richtung der Rückstellung jeweils einen radialen Hebelarm (710, 720, 730, 740) der Übertragungshebel (71 - 74) gegen einen der abgewinkelten Stützarme (314, 315; 325, 326, 332, 333) des Schlingfederbandes (31 - 33) und gegen Anschläge des Verstärkungshebels (5, 6, 6') drückt.

5. Verstellvorrichtung nach Anspruch 4, **dadurch gekennzeichnet, dass** mindestens eine Rückstellfeder (91 - 93) auf zwei von den radialen Hebelarmen (710, 720, 730, 740) der Übertragungshebel (71 - 74) ausgehenden und in Umfangsrichtung gebogenen Hebelfortsätzen (712, 713; 722, 723; 731, 741) angeordnet ist, die sich konzentrisch zur Verstellachse (10) jeweils vom radialen Hebelarm (710, 720, 730, 740) des einen Übertragungshebels (71 - 74) zum radialen Hebelarm (710, 720, 730, 740) des anderen Übertragungshebels (71 - 74) erstrecken und zueinander ausgerichtet sind, und dass sich die Rückstellfeder (91 - 93) an den radialen Hebelarmen (710, 720, 730, 740) der Übertragungshebel (71 - 74) abstützt.

6. Verstellvorrichtung nach mindestens einem der Ansprüche 2-5, **dadurch gekennzeichnet, dass** der Verstärkungshebel (5) ein um die Verstellachse (10) angeordnetes Langloch (50) aufweist.

7. Verstellvorrichtung nach mindestens einem der Ansprüche 3-6, **dadurch gekennzeichnet, dass** die Übertragungshebel (71, 72) einen zweiten Hebelarm (711, 721) aufweisen, der an einem gehäusefesten Anschlag (40) und an einem Verbindungsbolzen (53) des Verstärkungshebels (5) mit dem Antriebselement (1) anliegt und dass zum Rückstellen des Antriebselements (1) in Abhängigkeit von der Richtung der Rückstellbewegung jeweils einer der zweiten Hebelarme (711, 721) der Übertragungshebel (71, 72) gegen den mit dem Antriebselement (1) gelenkig verbundenen Verbindungsbolzen (53) drückt.

8. Verstellvorrichtung nach Anspruch 7, **dadurch gekennzeichnet, dass** zwei Rückstellfedern (91, 92) auf den Hebelfortsätzen (712, 713; 722, 723) der Übertragungshebel (71, 72) geführt sind und sich an den radialen und zweiten Hebelarmen der Übertragungshebel (71, 72) abstützen.

9. Verstellvorrichtung nach Anspruch 7 oder 8, **dadurch gekennzeichnet, dass** an den Enden der radialen Hebelarme (710, 720) Kontaktnasen (714, 724) ausgebildet sind, die zum Rückstellen des Schlingfederbandes (31, 32) gegen die abgewinkelten Stützarme (314, 315; 325, 326) des Schlingfederbandes (31, 32) drücken.

10. Verstellvorrichtung nach mindestens einem der voranstehenden Ansprüche, **dadurch gekennzeichnet, dass** die einen Federenden (310, 311) und die Enden (312, 313) der abgewinkelten Stützarme (314, 315) des Schlingfederbandes (31) über Stege (318, 319) miteinander verbunden sind

11. Verstellvorrichtung nach Anspruch 10, **dadurch gekennzeichnet, dass** die abgewinkelten Stützarme (314, 315) des Schlingfederbandes (31) eine Crackverbindung (314, 315) aufweisen.

12. Verstellvorrichtung nach mindestens einem der voranstehenden Ansprüche 4 bis 6, **dadurch gekennzeichnet, dass** an den Enden der radialen Hebelarme (730, 740) der Übertragungshebel (73, 74) Kontaktnasen (732, 742) angeordnet sind, von denen in axialer Richtung Anschlagnocken (733, 743) abstehen, die an gehäusefesten Anschlägen anliegen.

13. Verstellvorrichtung nach Anspruch 12, **gekennzeichnet durch** einen zweiteiligen Verstärkungshebel (6, 6') mit am ersten Verstärkungshebelteil (6) ausgebildetem, zwischen den Federenden (321, 322) des Schlingfederbandes (32) angeordnetem Nocken (61), einem die Verstellachse (10) einfassenden Langloch (60) und einem diagonal gegenüberliegenden ersten Verbindungselement (62), das mit einem zweiten Verbindungselement (66) des zweiten Verstärkungshebelteils (6') verbunden ist, das eine um die Verstellachse (10) angeordnete Bohrung und zwei an den Anschlagnocken (733, 743) der Übertragungshebel (73, 74) anliegende Anschläge (67, 68) aufweist.

14. Verstellvorrichtung nach Anspruch 13, **dadurch gekennzeichnet, dass** die beiden Verstärkungshebelteile (6, 6') in axialer Richtung übereinander angeordnet sind.

15. Verstellvorrichtung nach Anspruch 13 oder 14, **dadurch gekennzeichnet, dass** von der Oberfläche des zweiten Verstärkungshebelteils (6') Stege (63, 64, 65) abstehen, die durch in Umfangsrichtung verlaufende Schlitze (42, 43, 44) eines mit dem Verstellgehäuse (4) verbundenen Gehäusedeckels (41) ragen und in Aufnahmeschlitze (18) einer mit einem Betätigungshebel (1) oder einem Betätigungsrad verbindbaren Hebel-Anschraubplatte (15) gesteckt sind.

16. Verstellvorrichtung nach Anspruch 2, **dadurch gekennzeichnet, dass** der Verstärkungshebel (5') zwei symmetrisch zur Verstellachse (10) angeordnete, diagonal zu einer von der Verbindung des Verstärkungshebels (5') mit den Federenden (330, 331) des Schlingfederbandes (33) zur Wirkverbindung des Verstärkungshebels (5') mit dem Antriebselement (1) führenden Symmetrieachse verlaufende Anlageflächen (56, 57) aufweist, die korrespondierenden Endflächen zweier abgewinkelter Stützarme (332, 333) des Schlingfederbandes (33) gegenüberstehen, und dass die Federenden (830, 831) einer Zentrier- und Rückstellfeder (83) an einem ortsfesten Anschlag (40), an der Wirkverbindung (Nocken 55) zwischen dem Verstärkungshebel (5') und dem Antriebselement (1) und einem Vorsprung (334) des Schlingfederbandes (33) anliegen.

17. Verstellvorrichtung nach Anspruch 16, **dadurch gekennzeichnet, dass** die Zentrier- und Rückstellfeder (83) um eine konzentrisch zur Verstellachse (10) angeordnete Zentrierhülse (91) gelegt ist.

18. Verstellvorrichtung nach mindestens einem der voranstehenden Ansprüche, **dadurch gekennzeichnet, dass** die Bremssperre
- mindestens ein sich zum Blockieren eines abtriebsseitigen Drehmoments am Verstellgehäuse (4) abstützendes Schlingfederband (34 - 38) und
- zwischen den Federenden (342, 352, 362, 372, 380, 381) des Schlingfederbandes (34 - 38) und dem angetriebenen Element (11) angeordnete Verstärkungshebel (81 - 86), die bei einem abtriebsseitigen Drehmoment, das größer als ein antriebsseitiges Drehmoment ist, das Schlingfederband (34 - 38) zur reibschlüssigen Anlage am Verstellgehäuse (4) aufweiten und zumindest an abgewinkelten Stützarmen (341, 344, 351, 354, 362, 363, 382, 383) des Schlingfederbandes (34 - 38) anliegende Antriebsklauen (12, 13) oder erste Steuerelemente (111, 112) des angetriebenen Elements (11) aufweist, die bei einem antriebsseitigen Drehmoment, das größer als ein abtriebsseitiges Drehmoment ist, die reibschlüssige Anlage des Schlingfederbandes (34 - 38) am Verstellgehäuse (4) aufheben.

19. Verstellvorrichtung nach Anspruch 18, **dadurch gekennzeichnet, dass** zweite Steuerelemente (113, 114) des angetriebenen Elements (11) zusätzlich mit dem Abtriebselement (2) wirkverbunden sind und mittlere Anlageflächen (830, 840) der Verstärkungshebel (83, 84) an Anlageplatten (360, 370) des Schlingfederbandes (36, 37) anliegen.

20. Verstellvorrichtung nach Anspruch 18 oder 19, **dadurch gekennzeichnet, dass** das Abtriebselement (2) einen zwischen den Verstärkungshebeln (81 - 84) angeordneten Abtriebshebel (20) enthält, der mit einem konzentrisch zur Verstellachse (10) angeordneten Abtriebsritzel (21) verbunden ist.

21. Verstellvorrichtung nach mindestens einem der voranstehenden Ansprüche 18 bis 20, **dadurch gekennzeichnet, dass** die Verstärkungshebel (81 - 86) zwischen den äußeren Federenden (342, 352, 362, 372, 380, 381) des Schlingfederbandes (34 - 38) angeordnete äußere Anlageflächen (811, 821; 831, 841; 851, 861) und den äußeren Anlageflächen (811, 821; 831, 841; 851, 861) gegenüberliegende, am Abtriebselement (2) anliegende Anlagenasen (812, 822; 834, 844) oder konische Anlageflächen (855, 865) aufweisen.

22. Verstellvorrichtung nach mindestens einem der voranstehenden Ansprüche 18 bis 21, **dadurch gekennzeichnet, dass** die in das Verstellgehäuse (4) ragenden Antriebsklauen (12, 13) oder Steuerelemente (111 - 114) des angetriebenen Elements (11) an Anschlägen (813, 823; 854, 864) der Verstärkungshebel (81, 82; 85, 86) und an Anlageflächen der abgewinkelten Stützarmen (341, 351, 382, 383) des Schlingfederbandes (34, 35, 38) anliegen.

23. Verstellvorrichtung nach einem der voranstehenden Ansprüche 18 bis 22, **dadurch gekennzeichnet, dass** die Bremssperre zwei sich zum Blockieren eines abtriebsseitigen Drehmoments am Verstellgehäuse (4) abstützende, axial zueinander versetzte, schwimmend in dem angetriebenen Element (11) angeordnete Schlingfederbänder (34 - 37) aufweist, die in Umfangsrichtung gegeneinander verspannt sind, wobei die äußeren Federenden (342, 352; 362, 372) gegen die äußeren Anlageflächen (811, 821; 831, 841) der Verstärkungshebel (81 - 84) drücken und sich die Verstärkungshebel (81 - 84) in einen mittleren Bereich mit Anlageflächen (810, 820, 830, 840) an den abgewinkelten Federenden (341, 351) oder an den Anlageplatten (360, 370) der Schlingfederbänder (34 - 37) abstützen und dadurch mit ihren in Bezug auf die Verstellachse (10) entgegengesetzten Anlageflächen (812, 822, 832, 842) gegen den Abtriebshebel (20) drücken, so dass der Abtrieb spielfrei gesetzt ist.

24. Verstellvorrichtung nach Anspruch 23, **dadurch gekennzeichnet, dass** die Bremssperre zwei gegeneinander verschiebbare Verstärkungshebel (81 - 84) aufweist, die über wenigstens ein Federelement (95 - 98) vorgespannt sind.

25. Verstellvorrichtung nach Anspruch 24, **dadurch gekennzeichnet, dass** die abgewinkelten Stützarme (341, 351; 344, 354) der Schlingfederbänder (34, 35) Aufnahmen (343, 353) für eine gebogene, vorzugsweise mittig abgestützte Blattfeder (95) aufweisen, die die abgewinkelten Stützarme (341, 351; 344, 354) der Schlingfederbänder (34, 35) miteinander verbindet.

26. Verstellvorrichtung nach Anspruch 24, **dadurch gekennzeichnet, dass** das Federelement aus einer zwischen den an den äußeren Federenden (342, 352) der Schlingfederbänder (34, 35) anliegenden äußeren Anlagefläche (811, 821) der Verstärkungshebel (81, 82) angeordneten Druckfeder (96) besteht.

27. Verstellvorrichtung nach Anspruch 24, **dadurch gekennzeichnet, dass** als Federelement eine mit ihren Federenden an Anlagen (361, 371) der Schlingfederbänder (36, 37) abgestützte und um die Verstellachse (10) gelegte Omega-Feder (97) vorgesehen ist.

28. Verstellvorrichtung nach Anspruch 24, **dadurch gekennzeichnet, dass** das Federelement aus einer Druckfeder (98) besteht, die an einander gegenüberstehenden Anlageschultern (364, 374) der Schlingfederbänder (36, 37) anliegt.

29. Verstellvorrichtung nach mindestens einem der voranstehenden Ansprüche 18 bis 28, **dadurch gekennzeichnet, dass** das Abtriebselement (2)
- Ausnehmungen (23, 24) zur Aufnahme von Anschlagnasen (832, 842) der Verstärkungshebel (83, 84) aufweist, die den an den äußeren Federenden (362, 372) der Schlingfederbänder (36, 37) anliegenden äußeren Anlageflächen (831, 841) gegenüberliegen und
- einen Abtriebsnocken (22) aufweist, an dem die zweiten Steuerelemente (113, 114) des angetriebenen Elements (11) anliegen.

30. Verstellvorrichtung nach einem der voranstehenden Ansprüche 18 bis 29, **dadurch gekennzeichnet, dass** ein einzelnes Schlingfederband (38) und zwei Verstärkungshebel (85, 86) vorgesehen sind und dass wenigstens ein Paar der Anlageflächen (851, 861; 852, 862; 855, 865) der Verstärkungshebel (85, 86) beiderseits einer von der Verstellachse (10) und dem Abtriebselement (2) gebildeten Symmetrieachse einen bezüglich dieser Symmetrieachse winkligen Verlauf aufweisen, so dass der Abtrieb spielfrei gesetzt ist und das Schlingfederband (38) auf das Verstellgehäuse (4) vorgespannt ist.

31. Verstellvorrichtung nach Anspruch 30, **dadurch gekennzeichnet, dass** mindestens eine Mitnahmefeder (991, 992) zwischen beidseitigen Anschlägen des Schlingfederbandes (38) und Antriebsklauen (12, 13) des angetriebenen Elements (11) angeordnet ist.

## Claims

1. Adjustment device for producing a two-sided rotational movement, more particularly for window lifters and seat adjusters in motor vehicles, with an adjustment housing (4), a drive element (1) pivotal about an adjustment axis (10), an angle-shifting element (11) driven by actuation of the drive element (1) with a hollow cylindrical bearing face, an output element (2), an adjustment drive mounted in the force flow between the drive element (1) and the driven element (11) and which transfers an adjusting movement of the drive element (1) only to the driven element (11) when the drive element (1) is moved from a neutral initial position into one or other direction, and with a brake lock which is mounted between the driven element (11) and output element (2) and blocks torque introduced on the output side and with at least one loop spring band (31 - 38),
**characterised in that**
the adjustment drive and/or brake lock contains at least one loop spring band (31-38) which has a circumference of less than 360° and bearing faces for transferring force from the drive element (1) to the driven element (11) or from the driven element (11) to the output element (2) or from the output element (2) to the adjustment housing (4).

2. Adjustment device according to claim 1, **characterised in that** the adjustment drive and/or the brake lock has a reinforcement lever (5, 5'; 6, 6'; 81 - 86) in active connection with the drive element (1), and a loop spring band (31-38) which bears with pretension at least partially against the hollow cylindrical bearing face (110) of the driven element (11) and/or of the adjustment housing (4), whereby the spring ends (310-313; 321-324; 330, 331, 342, 352, 362, 372, 380, 381) are in active connection with the reinforcement lever (5,5'; 6,6'; 81-86).

3. Adjustment device according to claim 1, **characterised in that** the reinforcement lever (5,5'; 6,6'; 81-86)
- is rotatable with play about the adjustment axis (10),
- has at least one cam (51, 52; 54, 61) which is positioned between the spring ends (310 - 313; 321-324; 330, 331) of the loop spring band (31-33) and which to transfer drive torque emanating from the drive element (1, 1') as the drive element (1, 1') pivots from the neutral initial position, widens out the loop spring band (31-33) so that it bears with friction engagement against the hollow cylindrical bearing face (110) of the driven element (11);
- and is in active connection with transfer levers (71-74) which during resetting of the drive element (1,1') from the deflected position into the neutral initial position act on the support arms (314, 315; 325,326; 332, 333) angled from the loop spring band (31-33) so that the loop spring band (31 - 33) is contracted and its friction locking contact against the hollow cylindrical bearing face (110) of the driven element (11) is lifted.

4. Adjustment device according to claim 3, **characterised in that** two transfer levers (71-74) attached to the adjustment axis (10) have lever arms (710, 720, 730, 740) protruding radially from the adjustment axis (10) and associated with an angled support (314,315, 325, 326, 332, 333) of the loop spring band (31-33), bear against a stop fixed on a housing and are in active connection with the reinforcement lever (5, 6, 6') and that between the transfer levers (71-74) at least one resetting spring (91-93) is mounted which for resetting the loop spring band (31-33) and the drive element (1, 2') connected to the reinforcement lever (5, 6 6') in dependence on the direction of the resetting action presses a radial lever arm (710, 720, 730, 740) of the transfer levers (71-74) against one of the angle support arms (314, 315; 325, 326, 332, 333) of the loop spring band (31-33) and against stops of the reinforcement lever (5, 6, 6').

5. Adjustment device according to claim 4, **characterised in that** at least one resetting spring (91-93) is mounted on two lever projections (712, 713; 722, 723, 731, 741) which extend from the radial lever arms (710, 720, 730, 740) of the transfer levers (71-74) and are bent round in the circumferential direction and which extend concentric with the adjustment axis (10) from the radial lever arm (710, 720, 730, 740) of the one transfer lever (71-74) to the radial lever arm (710, 720, 730, 740) of the other transfer lever (71-74) and are aligned relative to each other, and that the resetting spring (91-93) is supported on the radial lever arms (710, 720, 730, 740) of the transfer levers (71-74).

6. Adjustment device according to at least one of the claims 2 - 5, **characterised in that** the reinforcement lever (5) has an oblong hole (50) mounted about the adjustment axis (10).

7. Adjustment device according to at least one of the claims 3 - 6, **characterised in that** the transfer levers (71, 72) have a second lever arm (711, 721) which bears against a stop (40) fixed on the housing and against a connecting bolt (53) of the reinforcement lever (5) with the drive element (1) and that to reset the drive element (1) in dependence on the direction of the resetting movement each one of the second lever arms (711, 721) of the transfer levers (71, 72) presses against the connecting bolt (53) which is connected for articulated movement to the drive element (1)

8. Adjustment device according to claim 7, **characterised in that** two resetting springs (91, 92) are guided on lever projections (712, 713; 722, 723) of the transfer levers (71, 72) and are supported on the radial and second lever arms of the transfer levers (71, 72).

9. Adjustment device according to claim 7 or 8, **characterised in that** at the ends of the radial lever arms (710, 720) there are contact noses (714, 724) which for resetting the loop spring band (31, 32) press against the angled support arms (314, 315; 325, 326) of the loop spring band (31, 32).

10. Adjustment device according to at least one of the preceding claims, **characterised in that** the one spring ends (310, 311) and the ends (312, 313) of the angled support arms (314, 315) of the loop spring band (31) are connected to one another through webs (318, 319).

11. Adjustment device according to claim 10, **characterised in that** the angled support arms (314, 315) of the loop spring band (31) have a crack connection (314, 315).

12. Adjustment device according to at least one of the preceding claims 4 to 6, **characterised in that** at the ends of the radial lever arms (730, 740) of the transfer levers (73, 74) there are contact noses (732, 742) from which stop cams (733, 743) protrude in the axial direction and bear against stops fixed on the housing.

13. Adjustment device according to claim 12, **characterised by** a two-part reinforcement lever (6, 6') with cams (61) formed on the first reinforcement lever part (6) and mounted between the spring ends (321, 322) of the loop spring band (32), an oblong hole (60) holding the adjustment axis (10), and a diagonally opposite first connecting element (62) which is connected to a second connecting element (66) of the second reinforcement lever part (6') which has a bore arranged about the adjustment axis (10) and two stops (67,68) bearing against the stop cams (733, 743) of the transfer levers (73, 74).

14. Adjustment device according to claim 13, **characterised in that** the two reinforcement lever parts (6, 6') are arranged one above the other in the axial direction.

15. Adjustment device according to claim 13 or 14, **characterised in that** from the surface of the second reinforcement lever part (6') protrude webs (63, 64, 65) which project through circumferentially aligned slots (42, 43, 44) of a housing cover (41) connected to the adjustment housing (4) and are pushed into socket slots (18) of a lever screw-on plate (15) which can be connected to an actuating lever (1) or an actuating wheel.

16. Adjustment device according to claim 2, **characterised in that** the reinforcement lever (5') has two bearing faces (56,57) arranged symmetrical to the adjustment axis (10) and running diagonally to an axis of symmetry leading from the connection of the reinforcement lever (5') with the spring ends (330, 331) of the loop spring band (33) to the active connection of the reinforcement lever (5') with the drive element (1), whereby the bearing faces are opposite corresponding end faces of two angled support arms (332, 333) of the loop spring band (33), and that the spring ends (830, 831) of a centring and resetting spring (83) bear against a locally fixed stop (40), against the active connection (cam 55) between the reinforcement lever (5') and the drive element (1) and against a projection (334) of the loop spring band (33).

17. Adjustment device according to claim 16, **characterised in that** the centring and resetting spring (83) is placed about a centring sleeve (91) mounted concentric with the adjustment axis (10).

18. Adjustment device according to at least one of the preceding claims, **characterised in that** the brake lock
- has at least one loop spring band (34-48) supported on the adjustment housing (4) for blocking the torque on the output side, and
- reinforcement levers (81-86) mounted between the spring ends (342, 352, 362, 372, 380, 381) of the loop spring band (34-38) and the driven element (11) and which in the event of torque on the output side which is greater than torque on the drive side widen out the loop spring band (34-38) for friction contact against the adjustment housing (4) and drive claws (12, 13) bearing at least on angled support arms (341, 344; 351, 354, 362, 363, 382, 383) of the loop spring band (34-38) or first control elements (111, 112) of the driven element (11) which in the event of torque on the drive side which is greater than torque on the driven side lift the friction contact of the loop spring band (34-38) against the adjustment housing (4).

19. Adjustment device according to claim 18, **characterised in that** second control elements (113, 114) of the driven element (11) are additionally in active connection with the output element (2) and central bearing faces (830, 840) of the reinforcement levers (83, 84) bear against bearing plates (360, 370) of the loop spring band (36, 37).

20. Adjustment device according to claim 18 or 19, **characterised in that** the output element (2) contains an output lever (20) which is mounted between the reinforcement levers (81-84) and which is connected to an output pinion (21) mounted concentric with the adjustment axis (10).

21. Adjustment device according to at least one of the preceding claims 18 to 20 **characterised in that** the reinforcement levers (81-86) have outer bearing faces (811, 821; 831, 841; 851, 861) mounted between the outer spring ends (342, 352,362, 372, 380, 381) of the loop spring band (34-38) and have opposite the outer bearing faces (811, 821; 831, 841, 851, 861) bearing noses (812, 822, 834, 844) or conical bearing faces (855, 865) bearing against the output element (2).

22. Adjustment device according to at least one of the preceding claims 18 to 21, **characterised in that** the drive claws (12, 13) projecting into the adjustment housing (4) or the control elements (111-114) of the driven element (11) bear against stops (813, 823, 854, 864) of the reinforcement levers (81, 82, 85, 86) and against bearing faces of the angled support arms (341, 351, 382, 383) of the loop spring band (34, 35, 38).

23. Adjustment device according to one of the preceding claims 18 to 22, **characterised in that** the brake lock has two loop spring bands (34-37) mounted floating in the driven element (11) axially off-set relative to each other and supported on the adjustment housing (4) for blocking torque on the output side whereby the loop spring bands are tensioned towards each other in the circumferential direction with the outer spring ends (32, 352, 362, 372) pressing against the outer bearing faces (811, 821, 831, 841)of the reinforcement levers (81-84) and wherein the reinforcement levers (81-84) are supported in a central region with bearing faces (810, 820, 830, 840) against the angled spring ends (341, 351) or against the bearing plates (360, 370) of the loop spring bands (34-37) and thereby press with their opposite bearing faces (812, 822, 832, 842) in respect of the adjustment axis (10) against the output levers(20) so that the output is set free of play.

24. Adjustment device according to claim 23, **characterised in that** the brake lock has two mutually displaceable reinforcement levers (81-84) which are pretensioned through at least one spring element (95-98).

25. Adjustment device according to claim 24, **characterised in that** the angled support arms (341, 351; 344, 354) of the loop spring bands (34, 35) have sockets (343, 353) for a bent leaf spring (95) which is supported preferably centrally and connects the angled support arms (341, 351; 344, 354) of the loop spring bands (34, 35) to one another.

26. Adjustment device according to claim 24, **characterised in that** the spring element consists of a compression spring (6) mounted between the outer bearing faces (811, 821) of the reinforcement levers (81, 82) bearing against the outer spring ends (342, 352) of the loop spring bands (34, 35).

27. Adjustment device according to claim 24, **characterised in that** as the spring element is provided an omega spring (97) which is placed about the adjustment axis (10) and is supported with its spring ends against bearing faces (361, 371) of the loop spring bands.

28. Adjustment device according to claim 24, **characterised in that** the spring element consists of a compression spring (98) and bears against opposing stop shoulders (364, 374) of the loop spring bands (36, 37).

29. Adjustment device according to at least one of the preceding claims 18 to 28, **characterised in that** the output element (2)
- has recesses (23, 24) for receiving stop noses (832, 842) of the reinforcement levers (83, 84) which are opposite the outer bearing faces (831, 841) bearing against the outer spring ends (362, 372) of the loop spring bands (365, 37), and
- has an output cam (22) against which the second control elements (113, 114) of the driven element (11) bear.

30. Adjustment device according to one of the preceding claims 18 to 29, **characterised in that** a single loop spring band (38) and two reinforcement levers (85, 86) are provided and that at least one pair of bearing faces (851, 861, 852, 862, 855, 865) of the reinforcement levers (85, 86) on either side of an axis of symmetry formed by the adjustment axis (10) and output element (2) have an angled path relative to this axis of symmetry so that the output is set free of play and the loop spring band (38) is pretensioned onto the adjustment housing (4).

31. Adjustment device according to claim 30, **characterised in that** at least one entrainment spring (991, 992) is mounted between stops either side of the loop spring band (38) and drive claws (12, 13) of the driven element (11).

## Revendications

1. Dispositif de réglage permettant la production d'un mouvement de rotation bidirectionnel, en particulier pour des lève-vitres et des réglages de sièges dans des véhicules automobiles, avec un boîtier de réglage (4), un élément d'entraînement (1) pouvant pivoter autour d'un axe de réglage (10), un élément à ajustage angulaire (11) entraîné par l'actionnement de l'élément d'entraînement (1) et doté d'une surface d'appui de forme cylindrique creuse, un élément de sortie (2), un entraînement de réglage disposé fonctionnellement entre l'élément d'entraînement (1) et l'élément entraîné (11) et qui transmet un mouvement de réglage de l'élément d'entraînement (1) à l'élément entraîné (11) seulement lorsque l'élément d'entraînement (1) est déplacé à partir d'une position initiale neutre dans l'un ou l'autre sens, et avec un dispositif de blocage disposé entre l'élément entraîné (11) et l'élément de sortie (2) et qui bloque un couple de rotation introduit côté sortie et avec au moins une bande à ressort enroulé (31 - 38),
**caractérisé en ce**
**que** l'entraînement de réglage et/ou le dispositif de blocage comprend la au moins une bande à ressort enroulé (31 - 38), qui présente une périphérie de moins de 360° et des surfaces d'appui pour la transmission de force de l'élément d'entraînement (1) à l'élément entraîné (11) ou de l'élément entraîné (11) à l'élément de sortie (2) ou de l'élément de sortie (2) au boîtier de réglage (4).

2. Dispositif de réglage selon la revendication 1, **caractérisé en ce que** l'entraînement de réglage et/ou le dispositif de blocage présente un levier de renforcement (5, 5' ; 6, 6' ; 81- 86) en liaison fonctionnelle avec l'élément d'entraînement (1) et une bande à ressort enroulé (31 - 38) appliquée au moins partiellement, avec une précontrainte, contre la surface d'appui de forme cylindrique creuse (110) de l'élément entraîné (11) et/ou du boîtier de réglage (4), dont les extrémités de ressort (310 - 313 ; 321 - 324 ; 330, 331, 342, 352, 362, 372, 380, 381) sont en liaison fonctionnelle avec le levier de renforcement (5, 5' ; 6, 6' ; 81- 86).

3. Dispositif de réglage selon la revendication 2, **caractérisé en ce que** le levier de renforcement (5, 5' ; 6, 6' ; 81- 86)
- peut tourner autour de l'axe de réglage (10) avec un jeu,
- présente au moins une came (51, 52 ; 54 ; 61) positionnée entre les extrémités de ressort (310 - 313 ; 321 - 324 ; 330, 331) de la bande à ressort enroulé (31 - 33) et qui, pour la transmission d'un couple d'entraînement généré par l'élément d'entraînement (1, 1') par le pivotement de l'élément d'entraînement (1, 1') depuis la position initiale neutre, élargit la bande à ressort enroulé (31 - 33) de façon telle qu'elle s'applique par friction contre la surface d'appui de forme cylindrique creuse (110) de l'élément entraîné (11),
- et est en liaison fonctionnelle avec des leviers de transmission (71 - 74) qui, lors de la remise en position initiale neutre de l'élément d'entraînement (1, 1') depuis la position déviée, agissent sur des bras de support coudés (314, 315 ; 325, 326 ; 332, 333) de la bande à ressort enroulé (31 - 33) de façon telle que la bande à ressort enroulé (31 - 33) est resserrée et que son application par friction contre la surface d'appui de forme cylindrique creuse (110) de l'élément entraîné (11) disparaît.

4. Dispositif de réglage selon la revendication 3, **caractérisé en ce que** deux leviers de transmission (71 - 74) articulés sur l'axe de réglage (10) présentent des bras de levier (710, 720, 730, 740) partant radialement de l'axe de réglage (10), qui sont affectés à un bras de support coudé (314, 315 ; 325, 326 ; 332, 333) de la bande à ressort enroulé (31 - 33), s'appliquent contre une butée solidaire du boîtier et sont en liaison fonctionnelle avec le levier de renforcement (5, 6, 6'), et **en ce qu'**entre les leviers de transmission (71 - 74) est disposé au moins un ressort de rappel (91 - 93) qui, pour le repositionnement de la bande à ressort enroulé (31 - 33) et de l'élément d'entraînement (1, 1') relié au levier de renforcement (5, 6, 6'), pousse respectivement un bras de levier radial (710, 720, 730, 740) des leviers de transmission (71 - 74) contre un des bras de support coudés (314, 315 ; 325, 326, 332, 333) de la bande à ressort enroulé (31 - 33) et contre des butées du levier de renforcement (5, 6, 6') en fonction du sens du rappel.

5. Dispositif de réglage selon la revendication 4, **caractérisé en ce que** au moins un ressort de rappel (91 - 93) est disposé sur deux prolongements de levier (712, 713 ; 722, 723 ; 731, 741) partant des bras de levier radiaux (710, 720, 730, 740) des leviers de transmission (71 - 74) et courbés dans le sens périphérique, qui s'étendent chacun concentriquement à l'axe de réglage (10) du bras de levier radial (710, 720, 730, 740) d'un levier de transmission (71 - 74) au bras de levier radial (710, 720, 730, 740) de l'autre levier de transmission (71 - 74) et sont mutuellement alignés, et **en ce que** le ressort de rappel (91 - 93) s'appuie contre les bras de levier radiaux (710, 720, 730, 740) des leviers de transmission (71 - 74).

6. Dispositif de réglage selon au moins l'une quelconque des revendications 2 à 5, **caractérisé en ce que** le levier de renforcement (5) présente un trou oblong (50) prévu autour de l'axe de réglage (10).

7. Dispositif de réglage selon au moins l'une quelconque des revendications 3 à 6, **caractérisé en ce que** les leviers de transmission (71, 72) présentent un deuxième bras de levier (711, 721), qui s'applique contre une butée (40) solidaire du boîtier et contre un boulon d'assemblage (53) du levier de renforcement (5) avec l'élément d'entraînement (1) et **en ce que** pour le repositionnement de l'élément d'entraînement (1), un des deux deuxièmes bras de levier (711, 721) des leviers de transmission (71, 72) exerce une pression sur le boulon d'assemblage (53) relié de façon articulée à l'élément d'entraînement (1), en fonction du sens du mouvement de rappel.

8. Dispositif de réglage selon la revendication 7, **caractérisé en ce que** deux ressorts de rappel (91, 92) sont guidés sur les prolongements de levier (712, 713 ; 722, 723) des leviers de transmission (71, 72) et s'appuient contre les deuxièmes bras de levier radiaux des leviers de transmission (71, 72).

9. Dispositif de réglage selon la revendication 7 ou 8, **caractérisé en ce que** des ergots de contact (714, 724) sont formés aux extrémités des bras de levier radiaux (710, 720), lesquels ergots exercent une pression sur les bras de support coudés (314, 315 ; 325, 326) de la bande à ressort enroulé (31, 32) pour le repositionnement de la bande à ressort enroulé (31, 32).

10. Dispositif de réglage selon au moins l'une quelconque des revendications précédentes, **caractérisé en ce que** les premières extrémités (310, 311) et les extrémités (312, 313) des bras de support coudés (314, 315) de la bande à ressort enroulé (31) sont reliées les unes aux autres par des branches (318, 319).

11. Dispositif de réglage selon la revendication 10, **caractérisé en ce que** les bras de support coudés (314, 315) de la bande à ressort enroulé (31) présentent un joint fracturé (316, 317).

12. Dispositif de réglage selon au moins l'une quelconque des revendications précédentes 4 à 6, **caractérisé en ce qu'**aux extrémités des bras de levier radiaux (730, 740) des leviers de transmission (73, 74) sont prévus des ergots de contact (732, 742) desquels dépassent, dans le sens axial, des cames de butée (733, 743) qui viennent en contact avec des butées solidaires du boîtier.

13. Dispositif de réglage selon la revendication 12, **caractérisé par** un levier de renforcement en deux parties (6, 6') avec une came (61) formée sur la première partie de levier de renforcement (6), disposée entre les extrémités de ressort (321, 322) de la bande à ressort enroulé (32), un trou oblong (60) entourant l'axe de réglage (10) et un premier élément d'assemblage (62) opposé diagonalement, qui est relié à un deuxième élément d'assemblage (66) de la deuxième partie de levier de renforcement (6') qui présente un alésage prévu autour de l'axe de réglage (10) et deux butées (67, 68) en contact avec les cames de butée (733, 743) des leviers de transmission (73, 74).

14. Dispositif de réglage selon la revendication 13, **caractérisé en ce que** les deux parties de levier de renforcement (6, 6') sont disposées en superposition dans le sens axial.

15. Dispositif de réglage selon la revendication 13 ou 14, **caractérisé en ce que** des branches (63, 64, 65) font saillie de la surface de la deuxième partie de levier de renforcement (6'), lesquelles branches passent par des fentes (42, 43, 44) s'étendant dans le sens périphérique d'un couvercle de boîtier (41) relié au boîtier de réglage (4) et sont emboîtées dans des fentes réceptrices (18) d'une plaque à visser (15) pouvant être reliée à un levier d'actionnement (1) ou une roue d'actionnement.

16. Dispositif de réglage selon la revendication 2, **caractérisé en ce que** le levier de renforcement (5') présente deux surfaces d'appui (56, 57) disposées symétriquement à l'axe de réglage (10) et s'étendant diagonalement à un axe de symétrie allant de la liaison du levier de renforcement (5') avec les extrémités de ressort (330, 331) de la bande à ressort enroulé (33) à la liaison fonctionnelle du levier de renforcement (5') avec l'élément d'entraînement (1), ces surfaces faisant face à des surfaces terminales correspondantes des deux bras de support coudés (332, 333) de la bande à ressort enroulé (33), et **en ce que** les extrémités de ressort (830, 831) d'un ressort de centrage et de rappel (83) viennent en contact avec une butée fixe (40), avec la liaison fonctionnelle (came 55) entre le levier de renforcement (5') et l'élément d'entraînement (1) et avec une saillie (334) de la bande à ressort enroulé (33).

17. Dispositif de réglage selon la revendication 16, **caractérisé en ce que** le ressort de centrage et de rappel (83) est placé autour d'une douille de centrage (91) disposée concentriquement à l'axe de réglage (10).

18. Dispositif de réglage selon au moins l'une quelconque des revendications précédentes, **caractérisé en ce que** le dispositif de blocage comprend:
- au moins une bande à ressort enroulé (34 - 38) s'appuyant contre le boîtier de réglage (4) pour bloquer un couple de rotation côté sortie et
- des leviers de renforcement (81 - 86) disposés entre les extrémités de ressort (342, 352, 362, 372, 380, 381) de la bande à ressort enroulé (34 - 38) et l'élément entraîné (11) et qui, dans le cas d'un couple de rotation côté sortie qui est supérieur à un couple de rotation côté entraînement, élargissent la bande à ressort enroulé (34 - 38) pour assurer un appui par friction contre le boîtier de réglage (4), et des mâchoires d'entraînement (12, 13) ou premiers éléments de commande (111, 112) de l'élément entraîné (11) appliqués au moins contre les bras de support coudés (341, 344, 351, 354, 362, 63, 382, 383) de la bande à ressort enroulé (34 - 38) et qui, dans le cas d'un couple de rotation côté entraînement qui est supérieur à un couple de rotation côté sortie, annulent l'appui par friction de la bande à ressort enroulé (34 - 38) contre le boîtier de réglage (4).

19. Dispositif de réglage selon la revendication 18, **caractérisé en ce que** des deuxièmes éléments de commande (113, 114) de l'élément entraîné (11) sont également en liaison fonctionnelle avec l'élément de sortie (2) et des surfaces d'appui intermédiaires (830, 840) des leviers de renforcement (83, 84) sont en contact avec des plaques d'appui (360, 370) de la bande à ressort enroulé (36, 37).

20. Dispositif de réglage selon la revendication 18 ou 19, **caractérisé en ce que** l'élément de sortie (2) comprend un levier de sortie (20) disposé entre les leviers de renforcement (81 - 84) et qui est relié à un pignon de sortie (21) disposé concentriquement à l'axe de réglage (10).

21. Dispositif de réglage selon au moins l'une quelconque des revendications précédentes 18 à 20, **caractérisé en ce que** les leviers de renforcement (81 - 86) présentent des surfaces d'appui extérieures (811, 821 ; 831, 841 ; 851, 861) disposées entre les extrémités de ressort extérieures (342, 352, 362, 372, 380, 381) de la bande à ressort enroulé (34 - 38), et des ergots d'appui (812, 822 ; 834, 844) ou des surfaces d'appui coniques (855, 865) en contact avec l'élément de sortie (2) et en opposition aux surfaces d'appui extérieures (811, 821 ; 831, 841 ; 851, 861).

22. Dispositif de réglage selon au moins l'une quelconque des revendications précédentes 18 à 21, **caractérisé en ce que** les mâchoires d'entraînement (12, 13) ou éléments de commande (111 - 114) de l'élément entraîné (11) passant dans le boîtier de réglage (4) sont en contact avec des butées (813, 823 ; 854, 864) des leviers de renforcement (81, 82 ; 85, 86) et avec des surfaces d'appui des bras de support coudés (341, 351, 382, 383) de la bande à ressort enroulé (34, 35, 38).

23. Dispositif de réglage selon l'une quelconque des revendications précédentes 18 à 22, **caractérisé en ce que** le dispositif de blocage présente deux bandes à ressort enroulé (34 - 37) s'appuyant contre le boîtier de réglage (4) pour bloquer un couple de rotation côté sortie, décalées axialement l'une par rapport à l'autre, disposées en montage flottant dans l'élément entraîné (11) et serrées l'une contre l'autre dans le sens périphérique, les extrémités de ressort extérieures (342, 352 ; 362, 372) exerçant une pression contre les surfaces d'appui extérieures (811, 821 ; 831, 841) des leviers de renforcement (81 - 84) et les leviers de renforcement (81 - 84) s'appuyant contre les extrémités de ressort coudées (341, 351) ou contre les plaques d'appui (360, 370) des bandes à ressort enroulé (34 - 37) dans une zone intermédiaire avec des surfaces d'appui (810, 820, 830, 840), et par conséquent contre le levier de sortie (20) avec leurs surfaces d'appui (812, 822, 832, 842) opposées par rapport à l'axe de réglage (10), si bien que l'arbre de sortie est monté sans jeu.

24. Dispositif de réglage selon la revendication 23, **caractérisé en ce que** le dispositif de blocage présente deux leviers de renforcement (81 - 84) pouvant coulisser l'un par rapport à l'autre et qui sont précontraints par au moins un élément élastique (95 - 98).

25. Dispositif de réglage selon la revendication 24, **caractérisé en ce que** les bras de support coudés (341, 351 ; 344, 354) des bandes à ressort enroulé (34, 35) présentent des logements (343, 353) pour un ressort à lames (95) courbé, de préférence soutenu au centre, qui relie entre eux les bras de support coudés (341, 351 ; 344, 354) des bandes à ressort enroulé (34, 35).

26. Dispositif de réglage selon la revendication 24, **caractérisé en ce que** l'élément élastique est constitué d'un ressort de pression (96) disposé entre les surfaces d'appui extérieures (811, 821) des leviers de renforcement (81, 82) qui sont en contact avec les extrémités de ressort extérieures (342, 352) des bandes à ressort enroulé (34, 35).

27. Dispositif de réglage selon la revendication 24, **caractérisé en ce qu'**un ressort oméga (97) s'appuyant avec ses extrémités contre des appuis (361, 371) des bandes à ressort enroulé (36, 37) et positionné autour de l'axe de réglage (10) est prévu comme élément élastique.

28. Dispositif de réglage selon la revendication 24, **caractérisé en ce que** l'élément élastique est constitué d'un ressort de pression (98) qui est en contact avec des épaulements d'appui (364, 374), opposés l'un à l'autre, des bandes à ressort enroulé (36, 37).

29. Dispositif de réglage selon au moins l'une quelconque des revendications 18 à 28, **caractérisé en ce que** l'élément de sortie (2)
- présente des évidements (23, 24) pour loger des ergots de butée (832, 842) des leviers de renforcement (83, 84), lesquels sont opposés aux surfaces d'appui extérieures (831, 841) en contact avec les extrémités de ressort extérieures (362, 372) des bandes à ressort enroulé (36, 37), et
- présente une came de sortie (22) avec laquelle sont en contact les deuxièmes éléments de commande (113, 114) de l'élément entraîné (11).

30. Dispositif de réglage selon l'une quelconque des revendications précédentes 18 à 29, **caractérisé en ce qu'**une seule bande à ressort enroulé (38) et deux leviers de renforcement (85 ; 86) sont prévus et **en ce qu'**au moins une paire des surfaces d'appui (851, 861 ; 852, 862 ; 855, 865) des leviers de renforcement (85, 86) présentent, de part et d'autre d'un axe de symétrie formé par l'axe de réglage (10) et l'élément de sortie (2), un tracé en angle par rapport à cet axe de symétrie, de sorte que l'arbre de sortie est monté sans jeu et la bande à ressort enroulé (38) est précontrainte sur le boîtier de réglage (4).

31. Dispositif de réglage selon la revendication 30, **caractérisé en ce que** au moins un ressort d'entraînement (991, 992) est disposé entre les butées bilatérales de la bande à ressort enroulé (38) et les mâchoires d'entraînement (12, 13) de l'élément entraîné (11).
